# EUROPEAN PATENT SPECIFICATION

(11) **EP 3 192 783 B1**
(45) Date of publication and mention of the grant of the patent: **30.12.2020**
(21) Application number: 15840754.4
(22) Date of filing: 11.09.2015
(51) Int. Cl.: B32B 17/10

(54) **INTERLAYER FOR LAMINATED GLASS, AND LAMINATED GLASS**
ZWISCHENSCHICHT FÜR VERBUNDGLAS UND VERBUNDGLAS
COUCHE INTERMÉDIAIRE POUR VERRE FEUILLETÉ ET VERRE FEUILLETÉ

(30) Priority: 12.09.2014 JP 2014187077; 12.09.2014 JP 2014187078; 12.09.2014 JP 2014187079; 12.09.2014 JP 2014187080; 12.09.2014 JP 2014187081; 12.09.2014 JP 2014187082; 12.09.2014 JP 2014187083
(43) Date of publication of application: 19.07.2017
(73) Proprietor: Sekisui Chemical Co., Ltd., Osaka 530-8565 (JP)
(72) Inventor: IWAMOTO, Tatsuya, Kouka-shi Shiga 528-8585 (JP); MINAKUCHI, Nami, Kouka-shi Shiga 528-8585 (JP); TAKEDA, Yuuma, Kouka-shi Shiga 528-8585 (JP)
(74) Representative: Ter Meer Steinmeister & Partner
(86) International application number: PCT/JP2015/075934
(87) International publication number: WO 2016/039473

(56) References cited:
- EP-A1- 1 977 887
- WO-A1-2013/168714
- WO-A1-2013/188489
- WO-A1-2013/188489
- JP-A- 2009 540 065
- JP-A- 2010 523 449
- JP-A- 2013 107 821
- US-A1- 2007 287 786
- US-A1- 2008 268 270
- US-A1- 2010 124 647
- US-A1- 2011 287 265
- US-A1- 2013 183 507
- US-A1- 2013 189 528

## Description

### Technical Field

The present invention relates to an interlayer film for laminated glass used for obtaining laminated glass. Furthermore, the present invention relates to laminated glass including the interlayer film for laminated glass.

### Background Art

Laminated glass is excellently safe because it generates only a small amount of scattering glass fragments even when being subjected to external impact and is broken. Therefore, laminated glass is widely used in automobiles, railroad cars, airplanes, ships, buildings. Laminated glass is manufactured by interposing an interlayer film for laminated glass between two glass plates.

Interlayer films for laminated glass include a single-layered interlayer film having a structure consisting of a single layer and a multilayered interlayer film having a structure consisting of two or more layers.

The following Patent Literature 1 discloses, as an example of an interlayer film for laminated glass, a sound insulating layer containing 100 parts by weight of a polyvinyl acetal resin having a degree of acetalization of 60 to 85 mol%, 0.001 to 1.0 part by weight of at least one kind of metal salt among alkali metal salts and alkaline earth metal salts, and a plasticizer in an amount of greater than 30 parts by weight. This sound insulating layer alone can be used as an interlayer film.

The following Patent Literature 1 also describes a multilayered interlayer film in which the aforementioned sound insulating layer and another layer are laminated. The other layer laminated on the sound insulating layer contains 100 parts by weight of a polyvinyl acetal resin having a degree of acetalization of 60 to 85 mol%, 0.001 to 1.0 part by weight of at least one kind of metal salt among alkali metal salts and alkaline earth metal salts, and a plasticizer in an amount of 30 parts by weight or less.

The following Patent Literature 2 discloses an interlayer film which is a polymer layer having a glass transition temperature of 33°C or higher. Patent Literature 2 describes that the polymer layer is disposed between glass plates having a thickness of 4.0 mm or less.

The following Patent Literature 3 discloses an interlayer film containing (A) polyvinyl acetal, (B) at least one kind of plasticizer, (C) fumed silica, and (D) at least one kind of basic compound. In this interlayer film, a difference in refractive index between (C) fumed silica and plasticized polyvinyl acetal (A + B) is 0.015 or less, and a weight ratio of C/(A + B) is 2.7/100 to 60/100.

The following Patent Literature 4 discloses an interlayer film for laminated glass comprising a first layer comprising 100 parts by weight of polyvinyl butyral, 55 parts by weight of a plasticizer and 8 parts by weight of silica particles; a second layer containing 100 parts by weight of polyvinyl butyral and 40 parts by weight of a plasticizer arranged on a first surface of the first layer; a third layer containing 100 parts by weight of polyvinyl butyral and 40 parts by weight of a plasticizer arranged on the second surface side opposite to the first surface of the first layer.

### Citation List

### Patent Literature

[Patent Literature 1] JP-A-2007-070200
[Patent Literature 2] US 2013/0236711A1
[Patent Literature 3] WO 2008/122608A1
[Patent Literature 4] US 2011/287265 A1

### Summary of Invention

### Technical Problem

Laminated glass including an interlayer film of the related art as described in Patent Literature 1 to 3 has low bending rigidity in some cases. Therefore, for example, in a case where the laminated glass is used in side doors of an automobile, because there is no frame for fixing the laminated glass, and the laminated glass bends due to low rigidity, unfortunately, it is difficult to open and close the glass in some cases.

In recent years, in order to lighten a laminated glass, the reduction of a thickness of a glass plate has been required. In laminated glass in which an interlayer film is interposed between two glass plates, in a case where the glass plate has a small thickness, unfortunately, it is extremely difficult to maintain bending rigidity at a sufficiently high level.

For example, even if the thickness of the glass plate is reduced, as long as the bending rigidity of the laminated glass can be improved due to the interlayer film, the laminated glass can be lightened. In a case where the laminated glass is light, an amount of materials used in the laminated glass can be reduced, and an environmental load can be reduced. Furthermore, in a case where light laminated glass is used in automobiles, fuel efficiency can be improved, and as a result, an environmental load can be reduced.

Patent Literature 3 describes the improvement of dynamic characteristics such as tensile strength. Generally, tensile strength is different from bending rigidity. In some cases, even if tensile strength can be improved to some extent, bending rigidity cannot be sufficiently improved.

For laminated glass including an interlayer film, in addition to high bending rigidity, excellent sound insulating properties are required. In Patent Literature 3, even though tensile strength can be improved, sound insulating properties cannot be sufficiently improved in some cases. Particularly, unfortunately, Patent Literature 3 does not state that, in a case where glass plates having a small thickness are combined with an interlayer film including a sound insulating layer having a low glass transition temperature, bending rigidity of the laminated glass becomes insufficient.

Patent Literature 3 describes the use of fumed silica (C) in a multilayered interlayer film. However, in the multilayered interlayer film using the fumed silica (C), streak-like irregularities occur on a surface of the interlayer film or in an interface between layers of the interlayer film in some cases. The streak-like irregularities are called flow marks.

An object of the present invention is to provide an interlayer film for laminated glass that can improve bending rigidity and sound insulating properties of laminated glass and can inhibit the occurrence of flow marks. Furthermore, another object of the present invention is to provide laminated glass including the aforementioned interlayer film for laminated glass.

### Solution to Problem

The interlayer film for laminated glass according to the present invention is defined in the claims. According to a broad aspect of the present disclosure, there is provided an interlayer film for laminated glass that includes a first layer containing a thermoplastic resin and a second layer containing a thermoplastic resin, in which the second layer is disposed on a first surface side of the first layer, the first layer contains silica particles, a glass transition temperature of the first layer is lower than a glass transition temperature of the second layer, and tanδ of the first layer at 200°C is 0.8 or greater.

According to the invention, the thermoplastic resin in the first layer is a polyvinyl acetal resin. A content ratio of hydroxyl groups of the polyvinyl acetal resin in the first layer is preferably 28 mol% or less. The thermoplastic resin in the second layer is preferably a polyvinyl acetal resin.

In a certain aspect of the interlayer film for laminated glass according to the present invention, an absolute value of a difference between the glass transition temperature of the first layer and the glass transition temperature of the second layer is 30°C or higher.

In a certain aspect of the interlayer film for laminated glass according to the present invention, a glass transition temperature of the first layer is 15°C or lower.

In a certain aspect of the interlayer film for laminated glass according to the present invention, a content of the silica particles in the first layer is 5 parts by weight to 64 parts by weight with respect to 100 parts by weight of the thermoplastic resin in the first layer.

In a certain aspect of the interlayer film for laminated glass according to the present invention, the interlayer film includes a third layer containing a thermoplastic resin, and the third layer is disposed on a second surface side of the first layer that is opposite to the first surface.

In a certain aspect of the interlayer film for laminated glass according to the present invention, each of the first layer, the second layer, and the third layer contains a plasticizer.

In a certain aspect of the interlayer film for laminated glass according to the present invention, provided that a thickness of the interlayer film for laminated glass is T, a thickness of the first layer is 0.4T or less.

In a certain aspect of the interlayer film for laminated glass according to the present invention, a thickness of the first layer is 200 µm or less.

In a certain aspect of the interlayer film for laminated glass according to the present invention, when laminated glass is obtained by interposing the interlayer film for laminated glass between two sheets of green glass having a thickness of 2 mm based on JIS R3208, a visible light transmittance of the obtained laminated glass is 70% or greater.

In a certain aspect of the interlayer film for laminated glass according to the present invention, the interlayer film is used with a first glass plate with a thickness equal to or less than 1 mm and arranged between the first glass plate and a second glass plate to be used for obtaining laminated glass.

According to a broad aspect of the present invention, there is provided laminated glass including a first lamination glass member, a second lamination glass member, and the aforementioned interlayer film for laminated glass, in which the interlayer film for laminated glass is disposed between the first lamination glass member and the second lamination glass member.

In a certain aspect of the laminated glass according to the present invention, the first lamination glass member is a first glass plate, and a thickness of the first glass plate is 1 mm or less.

### Advantageous Effects of Invention

An interlayer film for laminated glass according to the present invention includes a first layer containing a thermoplastic resin and a second layer containing a thermoplastic resin, in which the second layer is disposed on a first surface side of the first layer, the first layer contains silica particles, a glass transition temperature of the first layer is lower than a glass transition temperature of the second layer, and tanδ of the first layer at 200°C is 0.8 or greater. Therefore, bending rigidity of laminated glass including the interlayer film can be improved, sound insulating properties of the laminated glass can be improved, and the occurrence of flow marks in the laminated glass can be inhibited.

### Brief Description of Drawings

Fig. 1 is a sectional view schematically showing an interlayer film for laminated glass according to a first embodiment of the present invention.
Fig. 2 is a sectional view schematically showing an example of interlayer film including the interlayer film for laminated glass shown in Fig. 1.
Fig. 3 is a schematic view for illustrating a method for measuring bending rigidity.
Figs. 4A and 4B are examples of images captured for evaluating flow marks.
Fig. 5 is an example of an image captured for evaluating flow marks.
Figs. 6A and 6B are examples of images captured for evaluating flow marks.

### Description of Embodiments

Hereinafter, the present invention will be specifically described.

An interlayer film for laminated glass (in the present specification, simply described as an "interlayer film" in some cases) according to the present invention has a structure consisting of two or more layers. The interlayer film according to the present invention may have a structure consisting of two layers or three or more layers. The interlayer film according to the present invention includes a first layer containing a thermoplastic resin and a second layer containing a thermoplastic resin. In the interlayer film according to the present invention, the second layer is disposed on a first surface side of the first layer.

In the interlayer film according to the present invention, the first layer contains silica particles.

In the interlayer film according to the present invention, a glass transition temperature of the first layer is lower than a glass transition temperature of the second layer.

In the interlayer film according to the present invention, tanδ of the first layer at 200°C is 0.8 or greater.

Because of being constituted as above, the interlayer film according to the present invention can improve bending rigidity of laminated glass including the interlayer film. In order to obtain laminated glass, the interlayer film is disposed between a first glass plate and a second glass plate in many cases. Even though the first glass plate has a small thickness, in a case where the interlayer film according to the present invention is used, bending rigidity of the laminated glass can be sufficiently improved. Furthermore, even though both of the first and second glass plates have a small thickness, in a case where the interlayer film according to the present invention is used, bending rigidity of the laminated glass can be sufficiently improved. Herein, in a case where both of the first and second glass plates have a great thickness, bending rigidity of the laminated glass is further improved.

Furthermore, because of being constituted as above, the interlayer film according to the present invention can improve sound insulating properties of laminated glass including the interlayer film.

In addition, because the interlayer film according to the present invention is constituted as above, in the interlayer film, the occurrence of streak-like irregularities called flow marks can be inhibited. As a result, the appearance of laminated glass including the interlayer film can become excellent, distortion of an image transmitted through the laminated glass can be prevented, and hence the stress that an observer may experience due to the image can be alleviated.

The aforementioned interlayer film may have a structure consisting of three or more layers, and may include a third layer in addition to the first and second layers. It is preferable that the interlayer film further includes the third layer containing a thermoplastic resin. In a case where the interlayer film includes the second and third layers, the third layer is disposed on a second surface side of the first layer that is opposite to the first surface described above.

A surface of the aforementioned second layer that is opposite to the aforementioned first layer side is preferably a surface on which a lamination glass member or a glass plate is laminated. A thickness of the glass plate laminated on the second layer is preferably 1 mm or less. The second surface of the first layer that is opposite to the first surface (surface on the second layer side) may be a surface on which a lamination glass member or a glass plate is laminated. A thickness of the glass plate laminated on the first layer is preferably 1 mm or less. A surface of the third layer that is opposite to the first layer side is preferably a surface on which a lamination glass member or a glass plate is laminated. A thickness of the glass plate laminated on the third layer is preferably 1 mm or less.

Due to the interlayer film, bending rigidity can be sufficiently improved. Therefore, the interlayer film is suitably used for obtaining laminated glass by using a first glass plate having a thickness of 1 mm or less and disposing the interlayer film between the first glass plate and a second glass plate. Furthermore, due to the interlayer film, bending rigidity can be sufficiently improved. Accordingly, the interlayer film is more suitably used for obtaining laminated glass by using the first glass plate having a thickness of 1 mm or less and a second glass plate having a thickness of 1 mm or less and disposing the interlayer film between the first glass plate and the second glass plate.

Hereinafter, specific embodiments of the present invention will be described with reference to drawings.

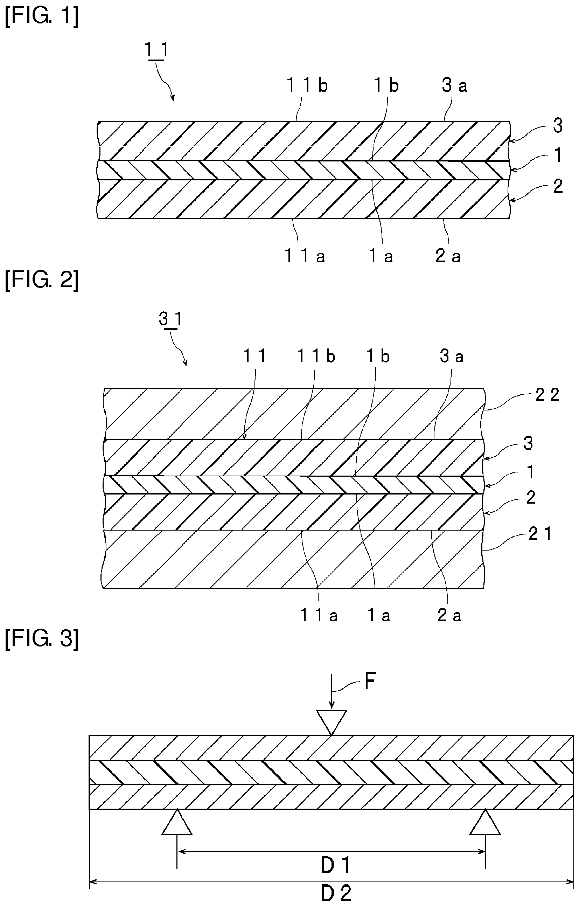

Fig. 1 is a sectional view schematically showing an interlayer film for laminated glass according to a first embodiment of the present invention.

An interlayer film 11 shown in Fig. 1 is a multilayered interlayer film having a structure consisting of two or more layers. The interlayer film 11 is used for obtaining laminated glass. The interlayer film 11 is an interlayer film for laminated glass. The interlayer film 11 includes a first layer 1, a second layer 2, and a third layer 3. On a first surface 1a of the first layer 1, the second layer 2 is disposed and laminated. On a second surface 1b of the first layer 1 that is opposite to the first surface 1a, the third layer 3 is disposed and laminated. The first layer 1 is an intermediate layer. Each of the second layer 2 and the third layer 3 is a protective layer, and in the present embodiment, each of the second layer 2 and the third layer 3 is a surface layer. The first layer 1 is disposed and interposed between the second layer 2 and the third layer 3. Accordingly, the interlayer film 11 has multilayer structure (second layer 2/first layer 1/third layer 3) in which the second layer 2, the first layer 1, and the third layer 3 are laminated in this order.

Between the second layer 2 and the first layer 1 and between the first layer 1 and the third layer 3, other layers may be disposed. The second layer 2 and the first layer 1 are preferably directly laminated on each other, and the first layer 1 and the third layer 3 are preferably directly laminated on each other. Examples of other layers include a layer containing polyethylene terephthalate.

The first layer 1 contains a thermoplastic resin and silica particles. The second layer 2 contains a thermoplastic resin. The third layer 3 preferably contains a thermoplastic resin.

The interlayer film may include a first layer as a layer which is an intermediate layer in the interlayer film or a layer which is not a surface layer in the interlayer film. It is preferable that the interlayer film includes a second layer as a surface layer in the interlayer film. It is preferable that the interlayer film includes a third layer as a surface layer in the interlayer film.

Hereinafter, the first layer, the second layer, and the third layer constituting the interlayer film according to the present invention and each of the components contained in the first layer, the second layer, and the third layer will be specifically described.

### (Thermoplastic resin)

The aforementioned first layer contains a thermoplastic resin (hereinafter, described as a thermoplastic resin (1) in some cases). The first layer contains, as the thermoplastic resin (1), a polyvinyl acetal resin (hereinafter, described as a polyvinyl acetal resin (1) in some cases). The aforementioned second layer contains a thermoplastic resin (hereinafter, described as a thermoplastic resin (2) in some cases). It is preferable that the second layer contains, as the thermoplastic resin (2), a polyvinyl acetal resin (hereinafter, described as a polyvinyl acetal resin (2) in some cases). It is preferable that the aforementioned third layer contains a thermoplastic resin (hereinafter, described as a thermoplastic resin (3) in some cases), and contains, as the thermoplastic resin (3), a polyvinyl acetal resin (hereinafter, described as a polyvinyl acetal resin (3) in some cases). The thermoplastic resin (1) is different from the thermoplastic resin (2), and it is preferable that the thermoplastic resin (1) is different from the thermoplastic resin (3), because then sound insulating properties are further improved. The polyvinyl acetal resin (1) is different from the polyvinyl acetal resin (2) and is preferably different from the polyvinyl acetal resin (3), because then sound insulating properties are further improved. One kind of each of the thermoplastic resin (1), the thermoplastic resin (2), and the thermoplastic resin (3) may be used singly, or two or more kinds thereof may be used in combination. One kind of each of the polyvinyl acetal resin (1), the polyvinyl acetal resin (2), and the polyvinyl acetal resin (3) may be used singly, or two or more kinds thereof may be used in combination.

The thermoplastic resin (2) includes a polyvinyl acetal resin, an ethylene-vinyl acetate copolymer resin, an ethylene-acrylic acid copolymer resin, a polyurethane resin, a polyvinyl alcohol resin.

The aforementioned polyvinyl acetal resin can be manufactured by, for example, acetalizing polyvinyl alcohol by using aldehyde. The polyvinyl acetal resin is preferably an acetalization product of polyvinyl alcohol. The polyvinyl alcohol is obtained by, for example, saponifying polyvinyl acetate. A degree of saponification of the polyvinyl alcohol is generally 70 to 99.9 mol%.

An average degree of polymerization of the aforementioned polyvinyl alcohol (PVA) is preferably 200 or greater, more preferably 500 or greater, even more preferably 1,500 or greater, still more preferably 1,600 or greater, particularly preferably 2,600 or greater, and most preferably 2,700 or greater. The average degree of polymerization of the polyvinyl alcohol is preferably 5,000 or less, more preferably 4,000 or less, and even more preferably 3,500 or less. In a case where the average degree of polymerization is equal to or greater than the aforementioned lower limit, penetration resistance of laminated glass is further improved. In a case where the average degree of polymerization is equal to or less than the aforementioned upper limit, an interlayer film is easily formed.

The average degree of polymerization of the polyvinyl alcohol is determined by a method based on JIS K6726 "Testing methods for polyvinyl alcohol".

The number of carbon atoms of an acetal group in the aforementioned polyvinyl acetal resin is preferably 3 to 5, and more preferably 4 or 5.

As the aforementioned aldehyde, generally, aldehyde having 1 to 10 carbon atoms is suitably used. Examples of the aldehyde having 1 to 10 carbon atoms include formaldehyde, acetaldehyde, propionaldehyde, n-butyraldehyde, isobutyraldehyde, n-valeraldehyde, 2-ethylbutyraldehyde, n-hexylaldehyde, n-octylaldehyde, n-nonylaldehyde, n-decylaldehyde, benzaldehyde. Among these, acetaldehyde, propionaldehyde, n-butyraldehyde, isobutyraldehyde, n-hexylaldehyde, or n-valeraldehyde is preferable, acetaldehyde, propionaldehyde, n-butyraldehyde, isobutyraldehyde, or n-valeraldehyde is more preferable, and n-butyraldehyde or n-valeraldehyde is even more preferable. One kind of the aldehyde may be used singly, or two or more kinds thereof may be used in combination.

The content ratio of hydroxyl groups (amount of hydroxyl group) of the polyvinyl acetal resin (1) is preferably 17 mol% or greater, more preferably 20 mol% or greater, and even more preferably 22 mol% or greater. The content ratio of hydroxyl groups is preferably 28 mol% or less, more preferably 27 mol% or less, even more preferably 25 mol% or less, and particularly preferably 24 mol% or less. In a case where the content ratio of hydroxyl groups is equal to or greater than the aforementioned lower limit, mechanical strength of the interlayer film is further improved. Particularly, in a case where the content ratio of hydroxyl groups of the polyvinyl acetal resin (1) is 20 mol% or greater, reaction efficiency becomes high, and productivity becomes excellent. In a case where the content ratio of hydroxyl groups is 28 mol% or less, sound insulating properties of the laminated glass are further improved. In a case where the content ratio of hydroxyl groups is equal to or less than the aforementioned upper limit, flexibility of the interlayer film is improved, and handling of the interlayer film becomes easy. Particularly, although laminated glass including the interlayer film, in which the content ratio of hydroxyl groups of the polyvinyl acetal resin (1) is 28 mol% or less, tends to have low bending rigidity, in a case where the aforementioned first layer contains silica particles, bending rigidity can be markedly improved.

A content ratio of hydroxyl groups of each of the polyvinyl acetal resin (2) and the polyvinyl acetal resin (3) is preferably 25 mol% or greater, more preferably 28 mol% or greater, even more preferably 30 mol% or greater, still more preferably 31.5 mol% or greater, yet more preferably 32 mol% or greater, and particularly preferably 33 mol% or greater. The content ratio of hydroxyl groups is preferably 38 mol% or less, more preferably 37 mol% or less, even more preferably 36.5 mol% or less, and particularly preferably 36 mol% or less. In a case where the content ratio of hydroxyl groups is equal to or greater than the aforementioned lower limit, bending rigidity is further improved, and adhesion of the interlayer film is further improved. In a case where the content ratio of hydroxyl groups is equal to or less than the aforementioned upper limit, flexibility of the interlayer film is improved, and handling of the interlayer film becomes easy.

From the viewpoint of further improving sound insulating properties, it is preferable that the content ratio of hydroxyl groups of the polyvinyl acetal resin (1) is lower than the content ratio of hydroxyl groups of the polyvinyl acetal resin (2). In addition, from the viewpoint of further improving sound insulating properties, it is preferable that the content ratio of hydroxyl groups of the polyvinyl acetal resin (1) is lower than the content ratio of hydroxyl groups of the polyvinyl acetal resin (3). Moreover, from the viewpoint of further improving sound insulating properties, each of an absolute value of a difference between the content ratio of hydroxyl groups of the polyvinyl acetal resin (1) and the content ratio of hydroxyl groups of the polyvinyl acetal resin (2) and an absolute value of a difference between the content ratio of hydroxyl groups of the polyvinyl acetal resin (1) and the content ratio of hydroxyl groups of the polyvinyl acetal resin (3) is preferably 1 mol% or greater, more preferably 5 mol% or greater, even more preferably 9 mol% or greater, particularly preferably 10 mol% or greater, and most preferably 12 mol% or greater. Each of the absolute value of the difference between the content ratio of hydroxyl groups of the polyvinyl acetal resin (1) and the content ratio of hydroxyl groups of the polyvinyl acetal resin (2) and the absolute value of the difference between the content ratio of hydroxyl groups of the polyvinyl acetal resin (1) and the content ratio of hydroxyl groups of the polyvinyl acetal resin (3) is preferably 20 mol% or less. Since silica particles are used, sound insulating properties tend to be further reduced due to the influence of silica particles, than in a case where silica particles are not used. However, in a case where the relationship of the content ratio of hydroxyl groups described above is satisfied, sound insulating properties can be effectively improved.

The content ratio of hydroxyl groups of the polyvinyl acetal resin is a value obtained by expressing a molar fraction, which is determined by dividing an amount of ethylene groups to which hydroxyl groups are bonded by a total amount of ethylene groups on a main chain, as a percentage. The amount of ethylene groups to which hydroxyl groups are bonded can be measured based on, for example, JIS K6728 "Testing methods for polyvinyl butyral".

A degree of acetylation of the polyvinyl acetal resin (1) is defined in claim 1. The degree of acetylation (amount of acetyl group) of the polyvinyl acetal resin (1) is preferably 0.01 mol% or greater, more preferably 0.1 mol% or greater, even more preferably 7 mol% or greater, and still more preferably 9 mol% or greater. The degree of acetylation of the polyvinyl acetal resin (1) is 15 mol% or less. In a case where the degree of acetylation is equal to or greater than the aforementioned lower limit, compatibility between the polyvinyl acetal resin and a plasticizer is improved. In a case where the degree of acetylation is equal to or less than the aforementioned upper limit, moisture resistance of the interlayer film and the laminated glass is improved. Particularly, in a case where the degree of acetylation of the polyvinyl acetal resin (1) is 0.1 to 15 mol%, penetration resistance becomes excellent.

A degree of acetylation of each of the polyvinyl acetal resin (2) and the polyvinyl acetal resin (3) is preferably 0.01 mol% or greater, and more preferably 0.5 mol% or greater. The degree of acetylation is preferably 10 mol% or less, more preferably 2 mol% or less, and particularly preferably 20 mol% or less. In a case where the degree of acetylation is equal to or greater than the aforementioned lower limit, compatibility between the polyvinyl acetal resin and a plasticizer is improved. In a case where the degree of acetylation is equal to or less than the aforementioned upper limit, moisture resistance of the interlayer film and the laminated glass is improved.

The degree of acetylation is a value obtained by expressing a molar fraction, which is determined by dividing an amount of ethylene groups to which acetyl groups are bonded by a total amount of ethylene groups on a main chain, as a percentage. The amount of ethylene groups to which acetyl groups are bonded can be measured based on, for example, JIS K6728 "Testing methods for polyvinyl butyral".

A degree of acetalization of the polyvinyl acetal resin (1) is defined in claim 1. The degree of acetalization (in a case of polyvinyl butyral resin, a degree of butyralization) of the polyvinyl acetal resin (1) is 60 mol% or greater. The degree of acetalization is preferably 85 mol% or less, more preferably 80 mol% or less, and even more preferably 75 mol% or less. In a case where the degree of acetalization is equal to or greater than the aforementioned lower limit, compatibility between the polyvinyl acetal resin and a plasticizer is improved. In a case where the degree of acetalization is equal to or less than the aforementioned upper limit, a reaction time necessary for manufacturing the polyvinyl acetal resin is shortened.

A degree of acetalization (in a case of polyvinyl butyral resin, a degree of butyralization) of each of the polyvinyl acetal resin (2) and the polyvinyl acetal resin (3) is preferably 55 mol% or greater, and more preferably 60 mol% or greater. The degree of acetalization is preferably 75 mol% or less, and more preferably 71 mol% or less. In a case where the degree of acetalization is equal to or greater than the aforementioned lower limit, compatibility between the polyvinyl acetal resin and a plasticizer is improved. In a case where the degree of acetalization is equal to or less than the aforementioned upper limit, a reaction time necessary for manufacturing the polyvinyl acetal resin is shortened.

The degree of acetalization is a value obtained by subtracting an amount of ethylene groups, to which hydroxyl groups are bonded, and an amount of ethylene groups, to which acetyl groups are bonded, from a total amount of ethylene groups on a main chain, dividing a value obtained as above by the total amount of ethylene groups on a main chain, and expressing a molar fraction obtained as above as a percentage.

The content ratio of hydroxyl groups (amount of hydroxyl groups), the degree of acetalization (degree of butyralization), and the degree of acetylation described above are preferably calculated from results measured by methods based on JIS K6728 "Testing methods for polyvinyl butyral". Here, the measurement based on ASTM D1396-92 may be used. In a case where the polyvinyl acetal resin is a polyvinyl butyral resin, the content ratio of hydroxyl groups (amount of hydroxyl groups), the degree of acetalization (degree of butyralization), and the degree of acetylation can be calculated from results measured by methods based on JIS K6728 "Testing methods for polyvinyl butyral".

From the viewpoint of further improving penetration resistance of the laminated glass, it is preferable that the polyvinyl acetal resin (1) is a polyvinyl acetal resin (A) having a degree of acetylation (a) of less than 8 mol% and a degree of acetalization (a) of 65 mol% or greater or a polyvinyl acetal resin (B) having a degree of acetylation (b) of 8 mol% or greater. The polyvinyl acetal resin (2) and the polyvinyl acetal resin (3) may be the polyvinyl acetal resin (A) or the polyvinyl acetal resin (B).

The degree of acetylation (a) of the polyvinyl acetal resin (A) is less than 8 mol%, preferably 7.9 mol% or less, more preferably 7.8 mol% or less, even more preferably 6.5 mol% or less, and particularly preferably 6 mol% or less. The degree of acetylation (a) is preferably 0.1 mol% or greater, more preferably 0.5 mol% or greater, even more preferably 2 mol% or greater, particularly preferably 5 mol% or greater, and most preferably 5.5 mol% or greater. In a case where the degree of acetylation (a) is 0.1 mol% or greater and less than 8 mol%, migration of a plasticizer can be easily controlled, and sound insulating properties of the laminated glass are further improved.

The degree of acetalization (a) of the polyvinyl acetal resin (A) is 65 mol% or greater, preferably 66 mol% or greater, even more preferably 67 mol% or greater, still more preferably 67.5 mol% or greater, and particularly preferably 75 mol% or greater. The degree of acetalization (a) is preferably 85 mol% or less, more preferably 84 mol% or less, even more preferably 83 mol% or less, and particularly preferably 82 mol% or less. In a case where the degree of acetalization (a) is equal to or greater than the aforementioned lower limit, sound insulating properties of the laminated glass are further improved. In a case where the degree of acetalization (a) is equal to or less than the aforementioned upper limit, a reaction time necessary for manufacturing the polyvinyl acetal resin (A) can be shortened.

A content ratio (a) of a hydroxyl group of the polyvinyl acetal resin (A) is preferably 18 mol% or greater, more preferably 19 mol% or greater, even more preferably 20 mol% or greater, particularly preferably 21 mol% or greater, and most preferably 23 mol% or greater. The content ratio (a) of the hydroxyl group is preferably 31 mol% or less, more preferably 30 mol% or less, even more preferably 29 mol% or less, and particularly preferably 28 mol% or less. In a case where the content ratio (a) of the hydroxyl group is equal to or greater than the aforementioned lower limit, adhesion of the aforementioned second layer is further improved. In a case where the content ratio (a) of the hydroxyl group is equal to or less than the aforementioned upper limit, sound insulating properties of the laminated glass are further improved.

A degree of acetylation (b) of the polyvinyl acetal resin (B) is 8 mol% or greater, preferably 9 mol% or greater, more preferably 9.5 mol% or greater, even more preferably 10 mol% or greater, and particularly preferably 10.5 mol% or greater. The degree of acetylation (b) is preferably 30 mol% or less, more preferably 28 mol% or less, even more preferably 26 mol% or less, and particularly preferably 24 mol% or less. In a case where the degree of acetylation (b) is equal to or greater than the aforementioned lower limit, sound insulating properties of the laminated glass are further improved. In a case where the degree of acetylation (b) is equal to or less than the aforementioned upper limit, a reaction time necessary for manufacturing the polyvinyl acetal resin (B) can be shortened.

A degree of acetalization (b) of the polyvinyl acetal resin (B) is preferably 50 mol% or greater, more preferably 53 mol% or greater, even more preferably 55 mol% or greater, and particularly preferably 60 mol% or greater. The degree of acetalization (b) is preferably 78 mol% or less, more preferably 75 mol% or less, even more preferably 72 mol% or less, and particularly preferably 70 mol% or less. In a case where the degree of acetalization (b) is equal to or greater than the aforementioned lower limit, sound insulating properties of the laminated glass are further improved. In a case where the degree of acetalization (b) is equal to or less than the aforementioned upper limit, a reaction time necessary or manufacturing the polyvinyl acetal resin (B) can be shortened.

A content ratio (b) of a hydroxyl group of the polyvinyl acetal resin (B) is preferably 18 mol% or greater, more preferably 19 mol% or greater, even more preferably 20 mol% or greater, particularly preferably 21 mol% or greater, and most preferably 23 mol% or greater. The content ratio (b) of the hydroxyl group is preferably 31 mol% or less, more preferably 30 mol% or less, even more preferably 29 mol% or less, and particularly preferably 28 mol% or less. In a case where the content ratio (b) of the hydroxyl group is equal to or greater than the aforementioned lower limit, adhesion of the aforementioned second layer is further improved. In a case where the content ratio (b) of the hydroxyl group is equal to or less than the aforementioned upper limit, sound insulating properties of the laminated glass are further improved.

Each of the polyvinyl acetal resin (A) and the polyvinyl acetal resin (B) is preferably a polyvinyl butyral resin.

### (Plasticizer)

The aforementioned first layer (including a single-layered interlayer film) preferably contains a plasticizer (hereinafter, described as a plasticizer (1) in some cases). It is preferable that the aforementioned second layer contains a plasticizer (hereinafter, described as a plasticizer (2) in some cases). Furthermore, it is preferable that the aforementioned third layer contains a plasticizer (hereinafter, described as a plasticizer (3) in some cases). The combination use of the plasticizer or the use of the polyvinyl acetal resin and the plasticizer appropriately improves the adhesion of the layer including the polyvinyl acetal resin and the plasticizer to a lamination glass member or other layers.. The plasticizer is not particularly limited. The plasticizers (1), (2), and (3) may be the same as or different from each other. One kind of each of the plasticizers (1), (2), and (3) may be used singly, or two or more kinds thereof may be used in combination.

Examples of the aforementioned plasticizer include organic ester plasticizers such as a monobasic organic acid ester and a polybasic organic acid ester, organic phosphoric acid plasticizers such as an organic phosphoric acid plasticizer and an organic phosphorous acid plasticizer. Among these, organic ester plasticizers are preferable. The aforementioned plasticizer is preferably a liquid plasticizer.

Examples of the aforementioned monobasic organic acid ester include a glycol ester obtained by reacting glycol with a monobasic organic acid. Examples of the glycol include triethylene glycol, tetraethylene glycol, tripropylene glycol. Examples of the monobasic organic acid include butyric acid, isobutyric acid, caproic acid, 2-ethyl butyrate, heptanoic acid, n-octylic acid, 2-ethylhexanoic acid, n-nonylic acid, decylic acid.

Examples of the aforementioned polybasic organic acid ester include an ester compound of a polybasic organic acid and an alcohol having a linear or branched structure containing 4 to 8 carbon atoms. Examples of the polybasic organic acid include adipic acid, sebacic acid, azelaic acid.

Examples of the aforementioned organic ester plasticizers include triethylene glycol-di-2-ethyl propanoate, triethylene glycol-di-2-ethyl butyrate, triethylene glycol-di-2-ethyl hexanoate, triethylene glycol dicaprylate, triethylene glycol di-n-octanoate, triethylene glycol di-n-heptanoate, tetraethylene glycol di-n-heptanoate, dibutyl sebacate, dioctyl azelate, dibutyl carbitol adipate, ethylene glycol di-2-ethyl butyrate, 1,3-propylene glycol di-2-ethyl butyrate, 1,4-butylene glycol di-2-ethyl butyrate, diethylene glycol di-2-ethyl butyrate, diethylene glycol di-2-ethyl hexanoate, dipropylene glycol di-2-ethyl butyrate, triethylene glycol di-2-ethyl pentanoate, tetraethylene glycol di-2-ethyl butyrate, diethylene glycol dicaprylate, dihexyl adipate, dioctyl adipate, cyclohexyl hexyl adipate, a mixture of heptyl adipate and nonyl adipate, diisononyl adipate, diisodecyl adipate, heptyl nonyl adipate, dibutyl sebacate, oil-modified alkyd sebacate, a mixture of a phosphoric acid ester and an adipic acid ester. Organic ester plasticizers other than these may also be used, and an adipic acid ester other than the aforementioned adipic acid ester may also be used.

Examples of the aforementioned organic phosphoric acid plasticizers include tributoxyethyl phosphate, isodecylphenyl phosphate, triisopropyl phosphate.

The aforementioned plasticizer is preferably a diester plasticizer represented by the following Formula (1) .

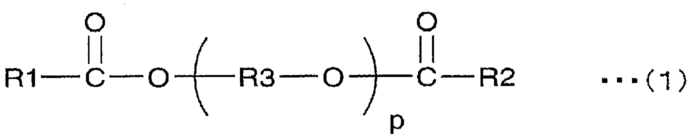

In Formula (1), each of R1 and R2 represents an organic group having 2 to 10 carbon atoms, R3 represents an ethylene group, an isopropylene group, or a n-propylene group, and p represents an integer of 3 to 10. Each of R1 and R2 in Formula (1) is preferably an organic group having 5 to 10 carbon atoms, and more preferably an organic group having 6 to 10 carbon atoms.

The aforementioned plasticizer preferably includes di-(2-butoxyethyl)-adipate (DBEA), triethylene glycol di-2-ethylhexanoate (3GO), triethylene glycol di-2-ethylbutyrate (3GH), or triethylene glycol di-2-ethylpropanoate, more preferably includes triethylene glycol di-2-ethylhexanoate (3GO), triethylene glycol di-2-ethylbutyrate (3GH), or triethylene glycol di-2-ethylpropanoate, even more preferably includes triethylene glycol di-2-ethylhexanoate or triethylene glycol di-2-ethylbutyrate, and particularly preferably includes triethylene glycol di-2-ethylhexanoate.

Each of a content of the plasticizer (2) (hereinafter, described as a content (2) in some cases) with respect to 100 parts by weight of the thermoplastic resin (2) and a content of the plasticizer (3) (hereinafter, described as a content (3) in some cases) with respect to 100 parts by weight of the thermoplastic resin (3) is preferably 10 parts by weight or greater, more preferably 15 parts by weight or greater, even more preferably 20 parts by weight or greater, and particularly preferably 24 parts by weight or greater. Each of the content (2) and the content (3) is preferably 40 parts by weight or less, more preferably 35 parts by weight or less, even more preferably 32 parts by weight or less, and particularly preferably 30 parts by weight or less. In a case where each of the content (2) and the content (3) is equal to or greater than the aforementioned lower limit, flexibility of the interlayer film is improved, and handling of the interlayer film becomes easy. In a case where each of the content (2) and the content (3) is equal to or less than the aforementioned upper limit, bending rigidity is further improved.

A content of the plasticizer (1) (hereinafter, described as a content (1) in some cases) with respect to 100 parts by weight of the thermoplastic resin (1) is preferably 50 parts by weight or greater, more preferably 55 parts by weight or greater, and even more preferably 60 parts by weight or greater. The content (1) is preferably 100 parts by weight or less, more preferably 90 parts by weight or less, even more preferably 85 parts by weight or less, and particularly preferably 80 parts by weight or less. In a case where the content (1) is equal to or greater than the aforementioned lower limit, flexibility of the interlayer film is improved, and handing of the interlayer film becomes easy. In a case where the content (1) is equal to or less than the aforementioned upper limit, penetration resistance of the laminated glass is further improved.

In order to improve sound insulating properties of the laminated glass, the content (1) is preferably greater than the content (2) and the content (3). Particularly, although laminated glass including an interlayer film in which the content (1) is 55 parts by weight or greater tends to have low bending rigidity, in a case where the aforementioned first layer contains silica particles, bending rigidity can be markedly improved.

From the viewpoint of further improving sound insulating properties of the laminated glass, each of an absolute value of a difference between the content (2) and the content (1) and an absolute value of a difference between the content (3) and the content (1) is preferably 10 parts by weight or greater, more preferably 15 parts by weight or greater, and even more preferably 20 parts by weight or greater. Each of the absolute value of the difference between the content (2) and the content (1) and the absolute value of the difference between the content (3) and the content (1) is preferably 80 parts by weight or less, more preferably 75 parts by weight or less, and even more preferably 70 parts by weight or less.

### (Silica particles)

The aforementioned first layer contains silica particles. The use of silica particles improves bending rigidity without deteriorating sound insulating properties and improves the adhesion between respective layers. One kind of the silica particles may be used singly, or two or more kinds thereof may be used in combination.

A specific surface area of the silica particles determined by a BET method is preferably 50 m²/g or greater, more preferably 100 m²/g or greater, even more preferably 200 m²/g or greater, particularly preferably 250 m²/g or greater, and most preferably 300 m²/g or greater. The specific surface area of the silica particles is preferably 500 m²/g or less. The specific surface area can be measured by a gas adsorption method by using a specific surface area/pore size distribution analyzer. Examples of the analyzer include "ASAP 2420" manufactured by Shimadzu Corporation.

A content of the silica particles with respect to 100 parts by weight of the thermoplastic resin (1) is preferably 1 part by weight or greater, more preferably 5 parts by weight or greater, even more preferably 10 parts by weight or greater, and particularly preferably 15 parts by weight or greater. The content of the silica particles is preferably 70 parts by weight or less, more preferably 64 parts by weight or less, even more preferably 60 parts by weight or less, still more preferably 55 parts by weight or less, particularly preferably 45 parts by weight or less, and most preferably 35 parts by weight or less. In a case where the content of the silica particles is equal to or greater than the aforementioned lower limit, the adhesion between respective layers is further improved, and bending rigidity is further improved. In a case where the content of the silica particles is equal to or less than the aforementioned upper limit, sound insulating properties are further improved.

### (Heat shielding compound)

It is preferable that the aforementioned interlayer film contains a heat shielding compound. Furthermore, it is preferable that each of the aforementioned first layer, second layer, and third layer contains a heat shielding compound. One kind of the heat shielding compound may be used singly, or two or more kinds thereof may be used in combination.

### Component X:

It is preferable that the aforementioned interlayer film contains, as a component X, at least one kind of compound among a phthalocyanine compound, a naphthalocyanine compound, and an anthracyanine compound. It is preferable that each of the aforementioned first layer, second layer, and third layer contains the component X. The component X is a heat shielding compound. One kind of the component X may be used singly, or two or more kinds thereof may be used in combination.

The component X is not particularly limited. As the component X, it is possible to use a phthalocyanine compound, a naphthalocyanine compound, and an anthracyanine compound known in the related art.

From the viewpoint of further improving heat shielding properties of the interlayer film and the laminated glass, the component X is preferably at least one kind of compound selected from the group consisting of phthalocyanine, a phthalocyanine derivative, naphthalocyanine, and a naphthalocyanine derivative, more preferably at least one kind of compound between phthalocyanine and a phthalocyanine derivative.

From the viewpoint of effectively improving heat shielding properties and maintaining a visible light transmittance at a much higher level over a long period of time, the component X preferably contains a vanadium atom or a copper atom. The component X preferably contains either a vanadium atom or a copper atom. The component X is more preferably at least one kind of compound between phthalocyanine containing a vanadium atom or a copper atom and a phthalocyanine derivative containing a vanadium atom or a copper atom. From the viewpoint of further improving heat shielding properties of the interlayer film and the laminated glass, the component X preferably has a structural unit in which an oxygen atom is bonded to a vanadium atom.

A content of the component X in 100% by weight of the layer (the first layer, the second layer, or the third layer) containing the component X is preferably 0.001% by weight or greater, more preferably 0.005% by weight or greater, even more preferably 0.01% by weight or greater, and particularly preferably 0.02% by weight or greater. The content of the component X is preferably 0.2% by weight or less, more preferably 0.1% by weight or less, even more preferably 0.05% by weight or less, and particularly preferably 0.04% by weight or less. In a case where the content of the component X is equal to or greater than the aforementioned lower limit and equal to or less than the aforementioned upper limit, heat shielding properties are sufficiently improved, and a visible light transmittance is sufficiently improved. For example, the visible light transmittance can become 70% or greater.

### Heat shielding particles:

It is preferable that the aforementioned interlayer film contains heat shielding particles. It is preferable that each of the aforementioned first layer, second layer, and third layer contains the heat shielding particles. The heat shielding particles are a heat shielding compound. The use of the heat shielding particles makes it possible to effectively block infrared rays (heat rays). One kind of the heat shielding particles may be used singly, or two or more kinds thereof may be used in combination.

From the viewpoint of further improving heat shielding properties of the laminated glass, the heat shielding particles are more preferably metal oxide particles. The heat shielding particles are preferably particles formed of a metal oxide (metal oxide particles).

Infrared rays having a wavelength of 780 nm or greater that is longer than a wavelength of visible light have a small energy amount compared to ultraviolet rays. However, infrared rays exert a strong thermal effect and are released as heat when being absorbed into a substance. Therefore, infrared rays are generally called heat rays. The use of the heat shielding particles makes it possible to effectively block infrared rays (heat rays). The heat shielding particles refer to particles that can absorb infrared rays.

Specific examples of the heat shielding particles include metal oxide particles such as aluminum-doped tin oxide particles, indium-doped tin oxide particles, antimony-doped tin oxide particles (ATO particles), gallium-doped zinc oxide particles (GZO particles), indium-doped zinc oxide particles (IZO particles), aluminum-doped zinc oxide particles (AZO particles), niobium-doped titanium oxide particles, sodium-doped tungsten oxide particles, cesium-doped tungsten oxide particles, thallium-doped tungsten oxide particles, rubidium-doped tungsten oxide particles, tin-doped indium oxide particles (ITO particles), tin-doped zinc oxide particles, and silicon-doped zinc oxide particles, lanthanum hexaboride (LaB₆) particles. Heat shielding particles other than these may also be used. Among these, metal oxide particles are preferable because these particles have a high function of blocking heat rays. The metal oxide particles are more preferably ATO particles, GZO particles, IZO particles, ITO particles, or tungsten oxide particles, and particularly preferably ITO particles or tungsten oxide particles. Especially, tin-doped indium oxide particles (ITO particles) are preferable because these particles have a high function of blocking heat rays and are easily obtained, and tungsten oxide particles are also preferable.

From the viewpoint of further improving heat shielding properties of the interlayer film and the laminated glass, the tungsten oxide particles are preferably metal-doped tungsten oxide particles. The "tungsten oxide particles" include metal-doped tungsten oxide particles. Specific examples of the metal-doped tungsten oxide particles include sodium-doped tungsten oxide particles, cesium-doped tungsten oxide particles, thallium-doped tungsten oxide particles, rubidium-doped tungsten oxide particles.

From the viewpoint of further improving heat shielding properties of the interlayer film and the laminated glass, cesium-doped tungsten oxide particles are particularly preferable. From the viewpoint of further improving heat shielding properties of the interlayer film and the laminated glass, the cesium-doped tungsten oxide particles are preferably tungsten oxide particles represented by Formula: Cs_{0.33}WO₃.

An average particle size of the heat shielding particles is preferably 0.01 µm or greater, and more preferably 0.02 µm or greater. The average particle size is preferably 0.1 µm or less, and more preferably 0.05 µm or less. In a case where the average particle size is equal to or greater than the aforementioned lower limit, shielding properties for heat rays are sufficiently improved. In a case where the average particle size is equal to or less than the aforementioned upper limit, dispersibility of the heat shielding particles is improved.

The aforementioned "average particle size" means a volume average particle size. The volume average particle size can be measured using a particle size distribution analyzer ("UPA-EX150" manufactured by NIKKISO CO., LTD.).

A content of the heat shielding particles in 100% by weight of the layer (the first layer, the second layer, or the third layer) containing the heat shielding particles is preferably 0.01% by weight or greater, more preferably 0.1% by weight or greater, even more preferably 1% by weight or greater, and particularly preferably 1.5% by weight or greater. The content of the heat shielding particles is preferably 6% by weight or less, more preferably 5.5% by weight or less, even more preferably 4% by weight or less, particularly preferably 3.5% by weight or less, and most preferably 3% by weight or less. In a case where the content of the heat shielding particles is equal to or greater than the aforementioned lower limit and equal to or less than the aforementioned upper limit, heat shielding properties are sufficiently improved, and a visible light transmittance is sufficiently improved.

### (Metal salt)

It is preferable that the aforementioned interlayer film contains at least one kind of metal salt (hereinafter, described as a metal salt M in some cases) among alkali metal salts and alkaline earth metal salts. It is preferable that each of the aforementioned first layer, second layer, and third layer contains the metal salt M. The use of the metal salt M makes it easy to control adhesiveness between the interlayer film and the lamination glass member or the adhesiveness between the respective layers in the interlayer film. One kind of the metal salt M may be used singly, or two or more kinds thereof may be used in combination.

It is preferable that the metal salt M contains at least one kind of metal selected from the group consisting of Li, Na, K, Rb, Cs, Mg, Ca, Sr, and Ba. It is preferable that the metal salt contained in the interlayer film contains at least one kind of metal between K and Mg.

The metal salt M is more preferably an alkali metal salt of an organic acid having 2 to 16 carbon atoms or an alkaline earth metal salt of an organic acid having 2 to 16 carbon atoms, and even more preferably a magnesium carboxylic acid salt having 2 to 16 carbon atoms or a potassium carboxylic acid salt having 2 to 16 carbon atoms.

The magnesium carboxylic acid salt having 2 to 16 carbon atoms and the potassium carboxylic acid salt having 2 to 16 carbon atoms are not particularly limited, and examples thereof include magnesium acetate, potassium acetate, magnesium propionate, potassium propionate, magnesium 2-ethylbutyrate, potassium 2-ethylbutanoate, magnesium 2-ethylhexanoate, potassium 2-ethylhexanoate.

A total content of Mg and K in the layer (the first layer, the second layer, or the third layer) containing the metal salt M is preferably 5 ppm or greater, more preferably 10 ppm or greater, and even more preferably 20 ppm or greater. The total content of Mg and K is preferably 300 ppm or less, more preferably 250 ppm or less, and even more preferably 200 ppm or less. In a case where the total content of Mg and K is equal to or greater than the aforementioned lower limit and equal to or less than the aforementioned upper limit, adhesiveness between the interlayer film and the lamination glass member or adhesiveness between the respective layers in the interlayer film can be controlled much better.

### (UV shielding agent)

The aforementioned interlayer film may contain a UV shielding agent. It is preferable that each of the aforementioned first layer, second layer, and third layer contains a UV shielding agent. The use of the UV shielding agent more reliably prevents a visible light transmittance from decreasing even if the interlayer film and the laminated glass are used for a long period of time. One kind of the UV shielding agent may be used singly, or two or more kinds thereof may be used in combination.

The UV shielding agent includes a UV absorber. It is preferable that the UV shielding agent is a UV absorber.

Examples of the UV shielding agent include a UV shielding agent containing a metal atom, a UV shielding agent containing a metal oxide, a UV shielding agent having a benzotriazole structure, a UV shielding agent having a benzophenone structure, a UV shielding agent having a triazine structure, a UV shielding agent having a malonic acid ester structure, a UV shielding agent having an oxalic acid anilide structure, a UV shielding agent having a benzoate structure.

Examples of the aforementioned UV absorber containing a metal atom include platinum particles, platinum particles whose surfaces are coated with silica, palladium particles, palladium particles whose surfaces are coated with silica. It is preferable that the UV shielding agent is not heat shielding particles.

The aforementioned UV shielding agent is preferably a UV shielding agent having a benzotriazole structure, a UV shielding agent having a benzophenone structure, a UV shielding agent having a triazine structure, or a UV shielding agent having a benzoate structure, more preferably a UV shielding agent having a benzotriazole structure or a UV shielding agent having a benzophenone structure, and even more preferably a UV absorber having a benzotriazole structure.

Examples of the aforementioned UV absorber containing a metal oxide include zinc oxide, titanium oxide, cerium oxide. The surface of the UV absorber containing a metal oxide may be coated. Examples of materials, with which the surface of the UV absorber containing a metal oxide is coated, include an insulative metal oxide, a hydrolysable organic silicon compound, a silicone compound.

Examples of the aforementioned UV absorber having a benzotriazole structure include UV absorbers having a benzotriazole structure, such as 2-(2'-hydroxy-5'-methylphenyl)benzotriazole ("Tinuvin P" manufactured by BASF SE), 2-(2'-hydroxy-3',5'-di-t-butylphenyl)benzotriazole ("Tinuvin 320" manufactured by BASF SE), 2-(2'-hydroxy-3'-t-butyl-5-methylphenyl)-5-chlorobenzotriazole ("Tinuvin 326" manufactured by BASF SE), and 2-(2'-hydroxy-3',5'-di-amylphenyl)benzotriazole ("Tinuvin 328" manufactured by BASF SE). The above UV shielding agent is preferably a UV absorber having a benzotriazole structure containing a halogen atom, and more preferably a UV absorber having a benzotriazole structure containing a chlorine atom, because these have excellent UV absorbing performance.

Examples of the aforementioned UV absorber having a benzophenone structure include octabenzone ("Chimassorb 81" manufactured by BASF SE).

Examples of the aforementioned UV absorber having a triazine structure include "LA-F70" manufactured by ADEKA Corporation, 2-(4,6-diphenyl-1,3,5-triazin-2-yl)-5-[(hexyl)oxy]-phenol ("Tinuvin 1577FF" manufactured by BASF SE).

Examples of the UV shielding agent having a malonic acid ester structure include dimethyl 2-(p-methoxybenzylidene)malonate, tetraethyl-2,2-(1,4-phenylenedimethylidene)bismalonate, 2-(p-methoxybenzylidene)-bis(1,2,2,6,6-pentamethyl 4-piperidinyl)malonate.

Examples of commercially available products of the UV shielding agent having a malonic acid ester structure include Hostavin B-CAP, Hostavin PR-25, and Hostavin PR-31 (all manufactured by Clariant International Ltd.).

Examples of the aforementioned UV shielding agent having an oxalic acid anilide structure include oxalic acid diamides having a substituted aryl group on a nitrogen atom, such as N-(2-ethylphenyl)-N'-(2-ethoxy-5-t-butylphenyl)oxalic acid diamide, N-(2-ethylphenyl)-N'-(2-ethoxy-phenyl)oxalic acid diamide, and 2-ethyl-2'-ethoxy-oxyanilide ("Sanduvor VSU" manufactured by Clariant International Ltd.).

Examples of the aforementioned UV absorber having a benzoate structure include 2,4-di-tert-butylphenyl-3,5-di-tert-butyl-4-hydroxybenzoate ("Tinuvin 120" manufactured by BASF SE).

From the viewpoint of further inhibiting a decrease in a visible light transmittance after a passage of time, a content of the UV shielding agent in 100% by weight of the layer (the first layer, the second layer, or the third layer) containing the UV shielding agent is preferably 0.1% by weight or greater, more preferably 0.2% by weight or greater, even more preferably 0.3% by weight or greater, and particularly preferably 0.5% by weight or greater. The content of the UV shielding agent is preferably 2.5% by weight or less, more preferably 2% by weight or less, even more preferably 1% by weight or less, and particularly preferably 0.8% by weight or less. Particularly, in a case where the content of the UV shielding agent in 100% by weight of the layer containing the UV shielding agent is 0.2% by weight or greater, a decrease in a visible light transmittance of the interlayer film and the laminated glass that occurs after a passage of time can be markedly inhibited.

### (Antioxidant)

It is preferable that the aforementioned interlayer film contains an antioxidant. It is preferable that each of the aforementioned first layer, second layer, and third layer contains an antioxidant. One kind of the antioxidant may be used singly, or two or more kinds thereof may be used in combination.

Examples of the antioxidant include a phenol-based antioxidant, a sulfur-based antioxidant, a phosphorus-based antioxidant. The phenol-based antioxidant is an antioxidant having a phenol skeleton. The sulfur-based antioxidant is an antioxidant containing a sulfur atom. The phosphorus-based antioxidant is an antioxidant containing a phosphorus atom.

The antioxidant is preferably a phenol-based antioxidant or a phosphorus-based antioxidant.

Examples of the aforementioned phenol-based antioxidant include 2,6-di-t-butyl-p-cresol (BHT), butylated hydroxyanisole (BHA), 2,6-di-t-butyl-4-ethylphenol, stearyl-β-(3,5-di-t-butyl-4-hydroxyphenyl)propionate, 2,2'-methylenebis-(4-methyl-6-butylphenol), 2,2'-methylenebis-(4-ethyl-6-t-butylphenol), 4,4'-butylidene-bis-(3-methyl-6-t-butylphenol), 1,1,3-tris-(2-methyl-hydroxy-5-t-butylphenyl)butane, tetrakis[methylene-3-(3',5'-butyl-4-hydroxyphenyl)propionate]methane, 1,3,3-tris-(2-methyl-4-hydroxy-5-t-butylphenol)butane, 1,3,5-trimethyl-2,4,6-tris(3,5-di-t-butyl-4-hydroxybenzyl)benzene, bis(3,3'-t-butylphenol)butyric acid glycol ester, bis(3-t-butyl-4-hydroxy-5-methylbenzene propanoate)ethylenebis(oxyethylene). One kind or two or more kinds among these antioxidants are suitably used.

Examples of the aforementioned phosphorus-based antioxidant include tridecyl phosphite, tris(tridecyl) phosphite, triphenyl phosphite, trinonylphenyl phosphite, bis(tridecyl)pentaerythritol diphosphite, bis(decyl)pentaerythritol diphosphite, tris(2,4-di-t-butylphenyl)phosphite, bis(2,4-di-t-butyl-6-methylphenyl)ethyl ester phosphorous acid, tris(2,4-di-t-butylphenyl)phosphite, 2,2'-methylenebis(4,6-di-t-butyl-1-phenyloxy)(2-ethylhexyloxy)phosphorus. One kind or two or more kinds among these antioxidants are suitably used.

Examples of commercially available products of the above antioxidants include "IRGANOX 245" manufactured by BASF SE, "IRGAFOS 168" manufactured by BASF SE, "IRGAFOS 38" manufactured by BASF SE, "SUMILIZER BHT" manufactured by Sumitomo Chemical Industry Company Limited, "IRGANOX 1010" manufactured by BASF SE.

In order to maintain a high visible light transmittance of the interlayer film and the laminated glass for a long period of time, it is preferable that a content of the aforementioned antioxidant in 100% by weight of the interlayer film or in 100% by weight of the layer (the first layer, the second layer, or the third layer) containing the antioxidant is preferably 0.1% by weight or greater. Furthermore, because the effects obtained by the addition of the antioxidant are saturated, the content of the antioxidant in 100% by weight of the interlayer film or in 100% by weight of the layer containing the antioxidant is preferably 2% by weight or less.

### (Other components)

If necessary, each of the aforementioned first layer, second layer, and third layer may contain additives such as a coupling agent containing silicon, aluminum, or titanium, a dispersant, a surfactant, a flame retardant, an antistatic agent, a pigment, a dye, an adhesion adjuster, a moisture proof agent, a fluorescent whitening agent, and an infrared absorber. One kind of these additives may be used singly, or two or more kinds thereof may be used in combination.

### (Other details of interlayer film for laminated glass)

From the viewpoint of further improving sound insulating properties of the laminated glass, the glass transition temperature of the first layer is 15°C or lower, more preferably 10°C or lower, even more preferably 5°C or lower, and particularly preferably 0°C or lower. The glass transition temperature of the first layer is preferably - 20°C or higher.

The glass transition temperature of the first layer is lower than a glass transition temperature of the second and third layers. That is, from the viewpoint of improving bending rigidity of the laminated glass, the glass transition temperature of the second and third layers are made higher than the glass transition temperature of the first layer. Since the first layer having a glass transition temperature lower than that of the second and third layers contains silica particles, and when the interlayer film includes the second and third layers having a glass transition temperature higher than that of the first layer, bending rigidity of the laminated glass is markedly improved. From the viewpoint of further improving bending rigidity and sound insulating properties of the laminated glass, an absolute value of a difference between the glass transition temperature of the first layer and the glass transition temperature of the layer is 20°C or higher, preferably 30°C or higher, particularly preferably 35°C or higher, and an absolute value of a difference between the glass transition of the first layer and the glass transition of the third layer is preferably 10°C or higher, more preferably 20°C or higher, even more preferably 30°C or higher, and particularly preferably 35°C or higher. The absolute value of the difference between the glass transition temperature of the first layer and the glass transition temperature of the second and third layers is preferably 70°C or lower.

The glass transition temperature can be measured by, for example, a method in which immediately after the obtained interlayer film is stored for 12 hours in an environment with a room temperature that equals 23 ± 2°C and a humidity that equals 25 ± 5%, viscoelasticity thereof is measured using a viscoelasticity analyzer "DVA-200" manufactured by IT Keisoku Seigyo Co., Ltd. It is preferable to measure the glass transition temperature under the conditions in which the interlayer film is cut in 8 mm (length) × 5 mm (width) and heated in a shear mode up to 100°C from -30°C at a rate of temperature increase of 5°C/min, a frequency of 1 Hz, and a strain of 0.08%.

From the viewpoint of inhibiting the occurrence of flow marks, tanδ of the first layer at 200°C is 0.8 or greater. From the viewpoint of further inhibiting the occurrence of flow marks, tanδ of the first layer at 200°C is preferably 0.85 or greater, more preferably 0.9 or greater, even more preferably 1.0 or greater, and particularly preferably 1.5 or greater. tanδ of the first layer at 200°C is preferably 7 or less, more preferably 5 or less, and even more preferably 3 or less.

Examples of a method for measuring tanδ of the first layer at 200°C includes a method (1) of measuring tanδ of a composition, which is for forming the first layer, at 200°C, and a method (2) of measuring tanδ of the first layer, which is obtained by peeling the second and third layers from the interlayer film, at 200°C. As the method (1), a method is preferable in which a kneaded material of the composition for forming the first layer is press-molded by a press molding machine so as to prepare a resin film A having a thickness of 0.35 mm, the resin film A is dried for 2 hours or longer at 50°C in a vacuum, viscoelasticity thereof is measured using a "rheometer ARES-G2" manufactured by TA Instruments, and tanδ of the first layer at 200°C is measured. As the method (2), a method is preferable in which the first layer, which is obtained by peeling the second and third layers from the interlayer film in an environment with a temperature of 23°C, is press-molded by a press molding machine at 150°C (for 10 minutes at 150°C in a non-pressurized state and for 10 minutes at 150°C in a pressurized state) such that a thickness thereof becomes 0.35 mm and a resin film A is prepared, the resin film A is dried for 2 hours or longer at 50°C in a vacuum, viscoelasticity thereof is measured using a "rheometer ARES-G2" manufactured by TA Instruments, and tanδ of the first layer at 200°C is measured. In the methods (1) and (2), a parallel plate having a diameter of 8 mm is taken as geometry of a jig for measurement, the measurement is performed under the conditions of a temperature: 200°C, strain: 8%, frequency range: 100 to 0.1 rad/s, sweeping is performed from 100 rad/s, and a value of tanδ at a frequency of 0.1 rad/s is taken as "tanδ at 200°C".

A thickness of the aforementioned interlayer film is not particularly limited. From the viewpoint of practically and from the viewpoint of sufficiently improving penetration resistance and bending rigidity of the laminated glass, the thickness of the interlayer film is preferably 0.1 mm or greater, and more preferably 0.25 mm or greater. The thickness of the interlayer film is preferably 3 mm or less, more preferably 2 mm or less, and even more preferably 1.5 mm or less. In a case where the thickness of the interlayer film is equal to or greater than the aforementioned lower limit, penetration resistance and bending rigidity of the laminated glass are improved. In a case where the thickness of the interlayer film is equal to or less than the aforementioned upper limit, transparency of the interlayer film is further improved.

The thickness of the interlayer film is denoted by T. A thickness of the aforementioned first layer is preferably 0.0625T or greater, and more preferably 0.1T or greater. The thickness of the first layer is preferably 0.4T or less, more preferably 0.375T or less, even more preferably 0.25T or less, and particularly preferably 0.15T or less. In a case where the thickness of the first layer is 0.4T or less, bending rigidity is further improved.

A thickness of each of the aforementioned second and third layers is preferably 0.3T or greater, more preferably 0.3125T or greater, and even more preferably 0.375T or greater. The thickness of each of the second and third layers is preferably 0.9375T or less, and more preferably 0.9T or less. The thickness of each of the second and third layers may be 0.46875T or less or 0.45T or less. In a case where the thickness of each of the second and third layers is equal to or greater than the aforementioned lower limit and equal to or less than the aforementioned upper limit, rigidity and sound insulating properties of the laminated glass are further improved.

A total thickness of the aforementioned second and third layers is preferably 0.625T or greater, more preferably 0.75T or greater, and even more preferably 0.85T or greater. The total thickness of the second and third layers is preferably 0.9375T or less, and more preferably 0.9T or less. In a case where the total thickness of the second and third layers is equal to or greater than the aforementioned lower limit and equal to or less than the aforementioned upper limit, rigidity and sound insulating properties of the laminated glass are further improved.

A method for manufacturing the interlayer film according to the present invention is not particularly limited. Examples of the method for manufacturing the interlayer film according to the present invention include a method of forming each layer by using each resin composition for forming each layer and then, for example, laminating the obtained each layer, a method of laminating each layer by co-extruding each resin composition for forming each layer by using an extruder. A manufacturing method using extrusion molding is preferable because this method is suitable for continuous production.

The aforementioned second and third layers preferably contain the same polyvinyl acetal resin, and more preferably contain the same polyvinyl acetal resin and the same plasticizer, because then manufacturing efficiency of the interlayer film becomes excellent. For the same reason, the second and third layers are even more preferably formed of the same resin composition.

The aforementioned interlayer film has shapes of recesses and protrusions on at least one of the both surfaces thereof, and more preferably has shapes of recesses and protrusions on both surfaces thereof. A method for forming the shapes of recesses and protrusions is not particularly limited, and examples thereof include a lip embossing method, an embossing roll method, a calendar roll method, a profile extrusion method. Among these, an embossing roll method is preferable because this method makes it possible to form a large number of shapes of recesses and protrusions that are quantitatively constant recess and protrusion patterns.

### (Laminated glass)

Fig. 2 is a sectional view schematically showing an example of laminated glass including the interlayer film for laminated glass shown in Fig. 1.

Laminated glass 31 shown in Fig. 2 includes a first lamination glass member 21, a second lamination glass member 22, and the interlayer film 11. The interlayer film 11 is disposed and interposed between the first lamination glass member 21 and the second lamination glass member 22.

The first lamination glass member 21 is laminated on a first surface 11a of the interlayer film 11. The second lamination glass member 22 is laminated on a second surface 11b of the interlayer film 11 that is opposite to the first surface 11a. The first lamination glass member 21 is laminated on a surface 2a of the second layer 2 that faces outside. The second lamination glass member 22 is laminated on a surface 3a of the third layer 3 that faces outside.

As described above, the laminated glass according to the present invention includes the first lamination glass member, the second lamination glass member, and the interlayer film, and the interlayer film is the interlayer film for laminated glass according to the present invention. In the laminated glass according to the present invention, the interlayer film is disposed between the first lamination glass member and the second lamination glass member.

Examples of the aforementioned lamination glass members include a glass plate, a polyethylene terephthalate (PET) film. The laminated glass includes not only laminated glass in which an interlayer film is interposed between two sheets of glass plates but also laminated glass in which an interlayer film is interposed between a glass plate and a PET film. The laminated glass is a laminate including a glass plate, and it is preferable that at least one sheet of glass plate is used in the laminated glass.

Examples of the glass plate include inorganic glass and organic glass. Examples of the inorganic glass include float plate glass, heat ray-absorbing plate glass, heat ray-reflecting plate glass, polished plate glass, figured glass, wired plate glass. The organic glass is synthetic resin glass as a substitute for inorganic glass. Examples of the organic glass include a polycarbonate plate, a poly(meth)acrylic resin plate. Examples of the poly(meth)acrylic resin plate include a polymethyl (meth)acrylate plate.

A thickness of the aforementioned lamination glass member is preferably 1 mm or greater. The thickness of the lamination glass member is preferably 5 mm or less, and more preferably 3 mm or less. In a case where the lamination glass member is a glass plate, a thickness of the glass plate is preferably 0.5 mm or greater, and more preferably 0.7 mm or greater. The thickness of the glass plate is preferably 5 mm or less, and more preferably 3 mm or less. In a case where the lamination glass member is a PET film, a thickness of the PET film is preferably 0.03 mm to 0.5 mm.

The use of the interlayer film according to the present invention makes it possible to maintain bending rigidity of the laminated glass at a high level even if the laminated glass has a small thickness. From the viewpoint of lightening the laminated glass, reducing an environmental load by reducing the amount of materials of the laminated glass, or reducing an environmental load by improving fuel efficiency of an automobile by means of lightening the laminated glass, the thickness of the aforementioned glass plate is preferably 2 mm or less, more preferably 1.8 mm or less, even more preferably 1.5 mm or less, still more preferably 1 mm or less, yet more preferably 0.8 mm or less, and particularly preferably 0.7 mm or less.

A method for manufacturing the laminated glass is not particularly limited. For example, the interlayer film is interposed between the aforementioned first and second lamination glass members and aspirated under reduced pressure by being passed through pressing rolls or put into a rubber bag such that air remaining between the first lamination glass member, the second lamination glass member, and the interlayer film is removed. Then, the first and second lamination glass members and the interlayer film are preliminarily bonded to each other at a temperature of about 70°C to 110°C, thereby obtaining a laminate. Next, the laminate is put into an autoclave or pressed, and pressure-bonded at a temperature of about 120°C to 150°C under a pressure of 1 to 1.5 MPa. The laminated glass can be obtained in this way. At the time of manufacturing the laminated glass as above, the first layer, the second layer, and the third layer may be laminated.

The interlayer film and the laminated glass described above can be used in automobiles, railroad cars, airplanes, ships, buildings. Furthermore, the interlayer film and the laminated glass can also be used for other purposes. The interlayer film and the laminated glass are preferably an interlayer film and laminated glass for cars or buildings, and more preferably an interlayer film and laminated glass for cars. The interlayer film and the laminated glass can be used in front glass, side glass, rear glass, and roof glass of automobiles. The interlayer film and the laminated glass are suitably used in automobiles. The interlayer film is used for obtaining laminated glass for automobiles.

From the viewpoint of obtaining laminated glass having much better transparency, the aforementioned visible light transmittance of the laminated glass is preferably 65% or greater, and more preferably 70% or greater. The visible light transmittance of the laminated glass can be measured based on JIS R3211 (1998). The visible light transmittance of the laminated glass, which is obtained by interposing the interlayer film for laminated glass of the present invention between two sheets of green glass (heat ray-absorbing plate glass) having a thickness of 2 mm based on JIS R3208, is preferably 70% or greater. The visible light transmittance is more preferably 75% or greater.

Hereinafter, the present invention will be more specifically described based on examples.

The following materials were prepared.

### (Polyvinyl acetal resin)

Polyvinyl acetal resins shown in the following Tables 1 to 4 were appropriately used. For acetalization of all of the polyvinyl acetal resins used, n-butyraldehyde having 4 carbon atoms was used.

For the polyvinyl acetal resins, a degree of acetalization (degree of butyralization), a degree of acetylation, and a content ratio of hydroxyl groups were measured by the methods based on JIS K6728 "Testing methods for polyvinyl butyral". Herein, in a case where the degree of acetalization, the degree of acetylation, and the content ratio of hydroxyl groups were measured according to ASTM D1396-92, the same results were obtained as in a case where the methods based on JIS K6728 "Testing methods for polyvinyl butyral" were used.

### (Plasticizer)

Triethylene glycol di-2-ethylhexanoate (3GO) Di-(2-butoxyethyl)-adipate (DBEA)

### (Silica particles)

Silica particles (a) ("AEROSIL 380" manufactured by NIPPON AEROSIL CO., LTD., specific surface area determined by a BET method: 380 ± 30 m²/g)
Silica particles (b) ("BZ-400" manufactured by Tosoh Silica Corporation, specific surface area determined by a BET method: 450 m²/g)
Silica particles (c) ("AZ-204" manufactured by Tosoh Silica Corporation, specific surface area determined by a BET method: 300 m²/g)
Silica particles (d) ("AZ-201" manufactured by Tosoh Silica Corporation, specific surface area determined by a BET method: 300 m²/g)

### (UV shielding agent)

Tinuvin 326 (2-(2'-hydroxy-3'-t-butyl-5-methylphenyl)-5-chlorobenzotriazole, "Tinuvin 326" manufactured by BASF SE)

### (Antioxidant)

BHT (2,6-di-t-butyl-p-cresol)

### (Example 1)

### Preparation of composition for forming first layer:

100 parts by weight of a polyvinyl acetal resin of a kind shown in the following Table 1, 60 parts by weight of the plasticizer (3GO), 20 parts by weight of the silica particles (a), 0.2 parts by weight of the UV shielding agent (Tinuvin 326), and 0.2 parts by weight of the antioxidant (BHT) were mixed together, thereby obtaining a composition for forming a first layer.

### Preparation of composition for forming second layer and third layer:

100 parts by weight of a polyvinyl acetal resin of a kind shown in the following Table 1, 24 parts by weight of the plasticizer (3GO), 0.2 parts by weight of the UV shielding agent (Tinuvin 326), and 0.2 parts by weight of the antioxidant (BHT) were mixed together, thereby obtaining a composition for forming a second layer and a third layer.

### Preparation of interlayer film:

The composition for forming the first layer and the composition or forming the second and third layers were co-extruded using a co-extruder, thereby preparing an interlayer film (thickness: 780 µm) having a laminated structure consisting of the second layer (thickness: 340 µm)/the first layer (thickness: 100 µm)/the third layer (thickness: 340 µm).

### Preparation of laminated glass A (for measuring bending rigidity):

Two glass plates (clear float glass, 25 cm (length) × 10 cm (width) × 2.5 mm (thickness)) that were washed and dried were prepared. The interlayer film obtained as above was interposed between the two glass plates, thereby obtaining a laminate. The obtained laminate was put into a rubber bag and deaerated for 20 minutes at a degree of vacuum of 2,660 Pa (20 torr). Then, the laminate was held in an autoclave in the deaerated state for 30 minutes at 90°C, and in this state, the laminate was pressed in a vacuum. The laminate preliminarily pressure-bonded in this way was pressure-bonded in the autoclave for 20 minutes under the conditions of a temperature of 135°C and a pressure of 1.2 MPa (12 kg/cm²), thereby obtaining laminated glass A.

### Preparation of laminated glass B (for measuring bending rigidity):

One glass plate (clear float glass, 25 cm (length) × 10 cm (width) × 2.5 mm (thickness)) that was washed and dried was prepared. Furthermore, one glass plate (Gorilla glass 2, 25 cm (length) × 10 cm (width) × 0.7 mm (thickness)) that was washed and dried was prepared. Laminated glass B was obtained in the same manner as used for obtaining the laminated glass A, except that the aforementioned two glass plates were used.

### Preparation of laminated glass C (for measuring bending rigidity):

Two glass plates (Gorilla glass 2, 25 cm (length) × 10 cm (width) × 0.7 mm (thickness)) that were washed and dried were prepared. Laminated glass C was obtained in the same manner as used for obtaining the laminated glass A, except that the aforementioned two glass plates were used.

### Preparation of laminated glass G (for measuring bending rigidity):

One glass plate (clear float glass, 25 cm (length) × 10 cm (width) × 1.8 mm (thickness)) that was washed and dried was prepared. Furthermore, one glass plate (clear float glass, 25 cm (length) × 10 cm (width) × 1.0 mm (thickness)) that was washed and dried was prepared. Laminated glass G was obtained in the same manner as used for obtaining the laminated glass A, except that the aforementioned two glass plates were used.

### Preparation of laminated glass D (for measuring sound insulating properties):

The obtained interlayer film was cut in a size of 30 cm (length) × 2.5 cm (width). Then, the interlayer film was interposed between two sheets of green glass (30 cm (length) × 2.5 cm (width) × 2 mm (thickness)) based on JIS R3208, thereby obtaining a laminate. The laminate was put into a rubber bag, deaerated for 20 minutes at a degree of vacuum of 2.6 kPa. Then, the laminate was moved to an oven in the deaerated state, held for 30 minutes at 90°C, and pressed in a vacuum such that the laminate was preliminarily pressure-bonded. In an autoclave, the preliminarily pressure-bonded laminate was pressure-bonded for 20 minutes under the conditions of a temperature of 135°C and a pressure of 1.2 MPa, thereby obtaining laminated glass D.

### Preparation of laminated glass E (for measuring visible light transmittance):

The obtained interlayer film was cut in a size of 5 cm (length) × 5 cm (width). Then, two sheets of green glass (5 cm (length) × 5 cm (width) × 2 mm (thickness)) based on JIS R3208 were prepared. The obtained interlayer film was interposed between the two sheets of green glass, the resultant was held in a vacuum laminator for 30 minutes at 90°C, and pressed in a vacuum, thereby obtaining a laminate. In the laminate, the portion of the interlayer film sticking out of the glass plate was cut off, thereby obtaining laminated glass E.

### Preparation of laminated glass F (for evaluating flow marks):

The obtained interlayer film was cut in a size of 15 cm (length) × 30 cm (width). Then clear float glass (15 cm (length) × 30 cm (width) × 2.5 mm (thickness)) was prepared. Between the two sheets of clear float glass, the obtained interlayer film was interposed, and the resultant was held in a vacuum laminator for 30 minutes at 90°C and pressed in a vacuum, thereby obtaining a laminate. In the laminate, the portion of the interlayer film sticking out of the glass plat was cut off, thereby obtaining laminated glass F.

### (Examples 2 to 26 and Comparative Examples 1 to 3)

An interlayer film and laminated glass were obtained in the same manner as in Example 1, except that the type and the formulation amount of the polyvinyl acetal resin, the plasticizer, and the silica particles used in the composition for forming the first layer and the composition for forming the second and third layers were set as shown in the following Tables 1 to 4, and a thickness of each of the first layer, the second layer, and the third layer was set as shown in the following Tables 1 to 4. Furthermore, in Examples 2 to 26 and Comparative Examples 1 to 3, the same type of UV shielding agent and antioxidant as in Example 1 were formulated in the same formulation amount (0.2 parts by weight with respect to 100 parts by weight of the polyvinyl acetal resin) as in Example 1.

### (Evaluation)

### (1) Glass transition temperature

The obtained interlayer film was stored for 12 hours in an environment with room temperature that equaled 23 ± 2°C and a humidity that equaled 25 ± 5%. Immediately after the storage, by using a viscoelasticity analyzer "DVA-200" manufactured by IT Keisoku Seigyo Co., Ltd., viscoelasticity of the interlayer film was measured. The sample was cut in a size of 8 mm (length) × 5 mm (width), and the viscoelasticity thereof was measured under the conditions in which the sample was heated in a shear mode up to 100°C from -30°C at a rate of temperature increase of 5°C/min, a frequency of 1 Hz, and a strain of 0.08%. Among the obtained measurement results, a peak temperature of a loss tangent was taken as a glass transition temperature Tg (°C). Tg resulting from the first layer was lower than Tg resulting from the second and third layers.

### (2) tanδ at 200°C

A kneaded material of the composition for forming the first layer was prepared. The obtained kneaded material was press-molded by using a press molding machine, thereby obtaining a resin film A having a thickness of 0.35 mm. The obtained resin film A was dried in a vacuum for 2 hours or longer at 50°C. By using a "rheometer ARES-G2" manufactured by TA Instruments, viscoelasticity thereof was measured. A parallel plate having a diameter of 8 mm is taken as geometry of a jig for measurement, the measurement was performed under the conditions of a temperature: 200°C, strain: 8%, frequency range: 100 to 0.1 rad/s, sweeping was performed from 100 rad/s, and a value of tanδ at a frequency of 0.1 rad/s was taken as "tanδ at 200°C". The resin film A may be prepared in a manner in which the first layer, which was obtained by peeling the second and third layers from the interlayer film in an environment with a temperature of 23°C, was press-molded at 150°C (for 10 minutes at 150°C in a non-pressurized state and for 10 minutes at 150°C in a pressurized state) such that a thickness thereof became 0.35 mm.

### (3) Flow mark

As a light source, S-Light manufactured by NIPPON GIJUTSU co., LTD was used. The laminated glass F was disposed between the light source and a screen, such that a distance between the light source and the screen became 200 cm, and a distance between the light source and the interlayer film became 180 cm. The surface of the laminated glass F was directly irradiated with light. An image projected onto the screen was captured by a camera, and flow marks were judged based on the following criteria.

### [Criteria for judging flow marks]

○: Streak-like irregularities (flow marks) were not clearly observed.
Δ: Slight Streak-like irregularities (flow marks) were observed.
X: Streak-like irregularities (flow marks) were observed.

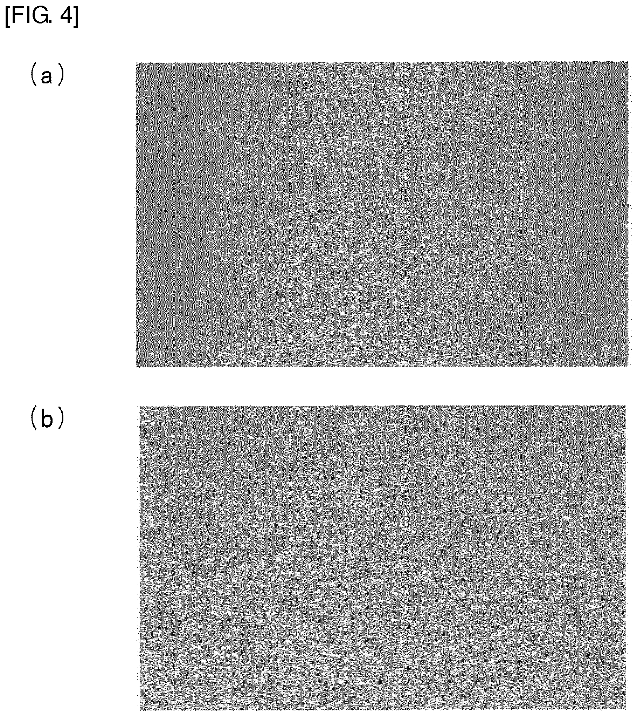

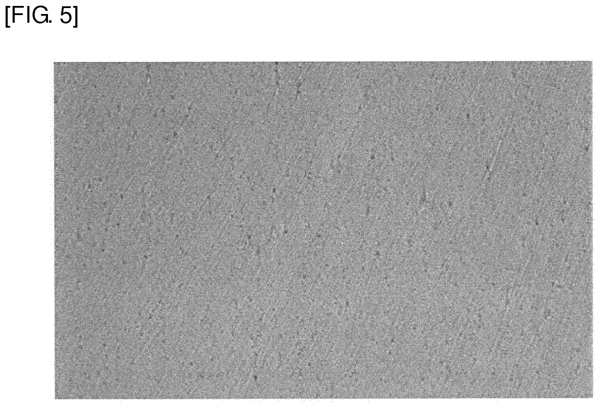

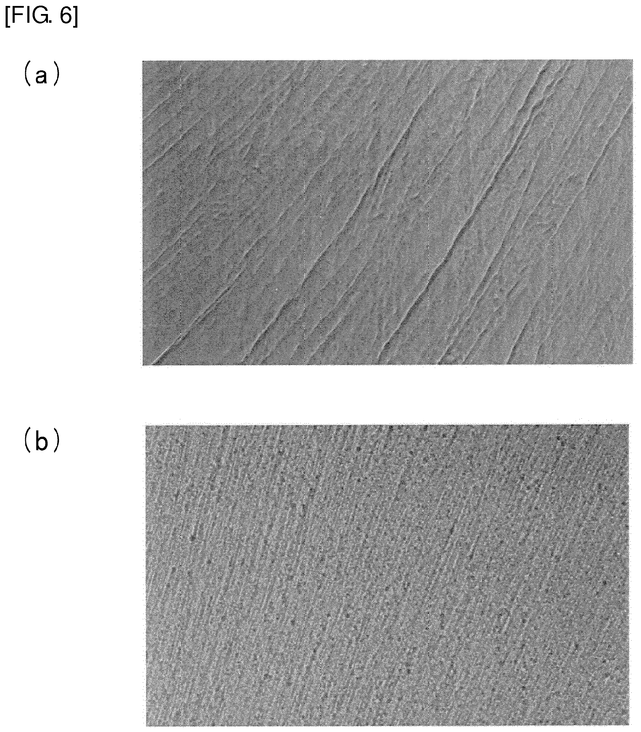

Examples of the captured images judged to be ○ are shown in Figs. 4A and 4B, an example of the captured image judged to be Δ is shown in Fig. 5, and examples of the captured images judged to be X are shown in Figs. 6A and 6B.

### (4) Bending rigidity

The laminated glass A, the laminated glass B, the laminated glass C, and the laminated glass G obtained as above were prepared. In the laminated glass A, the laminated glass B, the laminated glass C, and the laminated glass G, the following glass plates were used.

Laminated glass A: two glass plates (clear float glass, 25 cm (length) × 10 cm (width) × 2.5 mm (thickness))
Laminated glass B: one glass plate (clear float glass, 25 cm (length) × 10 cm (width) × 2.5 mm (thickness)) and one glass plate (Gorilla glass 2, 25 cm (length) × 10 cm (width) × 0.7 mm (thickness))
Laminated glass C: two glass plates (Gorilla glass 2, 25 cm (length) × 10 cm (width) × 0.7 mm (thickness))
Laminated glass G: one glass plate (clear float glass, 25 cm (length) × 10 cm (width) × 1.8 mm (thickness)) and one glass plate (clear float glass, 25 cm (length) × 10 cm (width) × 1.0 mm (thickness))

By a testing method schematically illustrated in Fig. 3, bending rigidity was evaluated. As a measurement device, a universal material testing machine 5966 manufactured by Instron Japan Company Ltd. including a static 3-point bending test jig 2810 was used. Under the measurement conditions of a measurement temperature of 20 ± 3°C, a distance D1 of 18 cm, and a distance D2 of 25 cm, the laminated glass was distorted in an F direction at a displacement rate of 1 mm/min, a stress at the time when a displacement of 1.5 mm was applied thereto was measured, and bending rigidity was calculated.

### (5) Sound insulating properties

The laminated glass D was vibrated by a vibration generator ("vibrator G21-005D" manufactured by Shinken Co., Ltd.) for a damping test, and vibration characteristics obtained from the laminated glass D were amplified using a mechanical impedance analyzer ("XG-81" manufactured by RION Co., Ltd.), and a vibration spectrum thereof was analyzed using a FFT spectrum analyzer ("FFT analyzer HP3582A" manufactured by Yokogawa Hewlett-Packard, Ltd.).

From a ratio of a loss factor obtained as above to a resonant frequency of the laminated glass, a graph showing a relationship between a sound frequency (Hz) and an acoustic transmission loss (dB) at 20°C was plotted, and a minimum acoustic transmission loss (TL value) at around a sound frequency of 2,000 Hz was determined. The greater the TL value, the better the sound insulating properties. The sound insulating properties were judged based on the following criteria.

### [Criteria for judging sound insulating properties]

○: A TL value was 35 dB or greater.
X: A TL value was less than 35 dB.

### (6) Visible light transmittance (A light, Y value, initial A-Y (380 to 780 nm))

BY using a spectrophotometer ("U-4100" manufactured by Hitachi High-Technologies Corporation.), a visible light transmittance of the obtained laminated glass E at a wavelength of 380 to 780 nm was measured based on JIS R3211 (1998). The visible light transmittance was judged based on the following criteria.

### [Criteria for judging visible light transmittance]

○: A visible light transmittance was 70% or greater.
X: A visible light transmittance was less than 70%.

Details and results of the above tests are shown in the following Tables 1 to 4. In the following Tables 1 to 4, formulated components other than the polyvinyl acetal resin, the plasticizer, and the silica particles are not described.

**[Table 1]**

| | | | | Example 1 | Example 2 | Example 3 | Comparative Example 1 | Comparative Example 4 | Comparative Example 2 |
|---|---|---|---|---|---|---|---|---|---|
| Composition of first layer | Thickness | | µm | 100 | 100 | 100 | 100 | 60 | 60 |
| | Polyvinyl acetal resin | Average degree of polymerization of PVA | | 1700 | 3000 | 1700 | 2500 | 1700 | 2500 |
| | | Content ratio of hydroxyl group | Mol% | 21.2 | 23.3 | 21.2 | 20.8 | 21.2 | 20.8 |
| | | Degree of acetylation | Mol% | 12.6 | 12.0 | 12.6 | 23.5 | 12.6 | 23.5 |
| | | Degree of acetalization | Mol% | 66.3 | 64.7 | 66.3 | 55.7 | 66.3 | 55.7 |
| | | Content | Part by weight | 100 | 100 | 100 | 100 | 100 | 100 |
| | Plasticizer | Type | | 3GO | 3GO | 3GO | 3GO | 3GO | 3GO |
| | | Content | Part by weight | 60 | 60 | 60 | 60 | 60 | 60 |
| | Silica particles | Type | | a | a | b | a | a | a |
| | | Content | Part by weight | 20 | 5 | 20 | 20 | 20 | 20 |
| | Glass transition temperature | | °C | -0.15 | 2.11 | -0.25 | -1.57 | -0.18 | -1.52 |
| | tanδ at 200°C | | | 1.67 | 0.90 | 2.50 | 0.77 | 1.65 | 0.76 |
| Composition of second and third layers | Thickness of each layer | | µm | 340 | 340 | 340 | 340 | 360 | 360 |
| | Polyvinyl acetal resin | Average degree of polymerization of PVA | | 1700 | 1700 | 1700 | 1700 | 1700 | 1700 |
| | | Content ratio of hydroxyl group | Mol% | 34.5 | 30.1 | 34.5 | 34.5 | 34.5 | 34.5 |
| | | Degree of acetylation | Mol% | 0.8 | 0.8 | 0.8 | 0.8 | 0.8 | 0.8 |
| | | Degree of acetalization | Mol% | 64.7 | 69.1 | 64.7 | 64.7 | 64.7 | 64.7 |
| | | Content | Part by weight | 100 | 100 | 100 | 100 | 100 | 100 |
| | | Type | | 3GO | 3GO | 3GO | 3GO | 3GO | 3GO |
| | Plasticizer | Content | Part by weight | 24 | 38.5 | 24 | 24 | 24 | 24 |
| | Glass transition temperature | | °C | 44.8 | 28.7 | 43.8 | 44.0 | 44.5 | 43.5 |
| Evaluation | Flow mark | | | ○ | ○ | ○ | X | ○ | X |
| | Bending rigidity | Laminated glass A | mm/N | 0.0034 | 0.0058 | 0.0043 | 0.0035 | 0.0033 | 0.0031 |
| | | Laminated glass B | mm/N | 0.0074 | 0.0109 | 0.0080 | 0.0073 | 0.0063 | 0.0064 |
| | | Laminated glass C | mm/N | 0.0465 | 0.0895 | 0.0532 | 0.0458 | 0.0353 | 0.0352 |
| | | Laminated glass G | mm/N | 0.0110 | 0.0179 | 0.0120 | 0.0109 | 0.0092 | 0.0091 |
| | Sound insulating properties: TL method | | | ○ | ○ | ○ | ○ | ○ | ○ |
| | Visible light transmittance | | | ○ | ○ | ○ | ○ | ○ | ○ |

**[Table 2]**

| | | | | Example 5 | Example 6 | Example 7 | Example 8 | Example 9 | Example 10 | Example 11 | Example 12 |
|---|---|---|---|---|---|---|---|---|---|---|---|
| Composition of first layer | Thickness | | µm | 100 | 100 | 100 | 100 | 100 | 100 | 100 | 100 |
| | Polyvinyl acetal resin | Average degree of polymerization of PVA | | 1700 | 1700 | 1700 | 1700 | 1700 | 1700 | 1700 | 1700 |
| | | Content ratio of hydroxyl group | Mol% | 23.1 | 23.1 | 23.1 | 23.1 | 21.2 | 23.1 | 23.1 | 23.1 |
| | | Degree of acetylation | Mol% | 12.5 | 12.5 | 12.5 | 12.5 | 12.6 | 12.5 | 12.5 | 12.5 |
| | | Degree of acetalization | Mol% | 64.5 | 64.5 | 64.5 | 64.5 | 66.2 | 64.5 | 64.5 | 64.5 |
| | | Content | Part by weight | 100 | 100 | 100 | 100 | 100 | 100 | 100 | 100 |
| | Plasticizer | Type | | 3GO | 3GO | 3GO | 3GO | 3GO | 3GO | 3GO | 3GO |
| | | content | Part by weight | 60 | 60 | 60 | 60 | 60 | 60 | 60 | 60 |
| | Silica particles | Type | | c | c | c | c | c | c | c | c |
| | | content | Part by weight | 20 | 20 | 20 | 20 | 20 | 20 | 20 | 20 |
| | Glass transition temperature | | °C | 2.13 | 2.13 | 2.13 | 2.13 | -0.12 | 2.13 | 2.13 | 2.13 |
| | tanδ at 200°C | | | 1.78 | 1.78 | 1.78 | 1.78 | 1.54 | 1.78 | 1.78 | 1.78 |
| Composition of second and third layers | Thickness of each layer | | µm | 340 | 340 | 340 | 340 | 340 | 340 | 340 | 340 |
| | Polyvinyl acetal resin | Average degree of polymerization of PVA | | 1700 | 1700 | 1700 | 1700 | 1700 | 1700 | 1700 | 1700 |
| | | Content ratio of hydroxyl group | Mol% | 34.5 | 33.2 | 32.5 | 31.4 | 34.5 | 35.4 | 36.5 | 37.3 |
| | | Degree of acetylation | Mol% | 0.8 | 0.8 | 0.8 | 0.8 | 0.8 | 0.8 | 0.8 | 0.8 |
| | | Degree of acetalization | Mol% | 64.7 | 66 | 66.7 | 67.8 | 64.7 | 63.8 | 62.7 | 61.9 |
| | | Content | Part by weight | 100 | 100 | 100 | 100 | 100 | 100 | 100 | 100 |
| | Plasticizer | Type | | 3GO | 3GO | 3GO | 3GO | 3GO | 3GO | 3GO | 3GO |
| | | content | Part by weight | 32 | 34.1 | 35.3 | 37.3 | 28.6 | 30.2 | 28.3 | 26.8 |
| | Glass transition temperature | | °C | 37.3 | 34.4 | 32.8 | 30.3 | 39.8 | 39.3 | 41.8 | 43.6 |
| Evaluation | Flow mark | | | ○ | ○ | ○ | ○ | ○ | ○ | ○ | ○ |
| | Bending rigidity | Laminated glass A | mm/N | 0.0044 | 0.0044 | 0.0045 | 0.0047 | 0.0038 | 0.0041 | 0.0041 | 0.0040 |
| | | Laminated glass B | mm/N | 0.0086 | 0.0085 | 0.0087 | 0.0091 | 0.0077 | 0.0081 | 0.0081 | 0.0080 |
| | | Laminated glass C | mm/N | 0.0648 | 0.0613 | 0.0640 | 0.0702 | 0.0512 | 0.0570 | 0.0560 | 0.0556 |
| | | Laminated glass G | mm/N | 0.0139 | 0.0135 | 0.0140 | 0.0150 | 0.0118 | 0.0128 | 0.0127 | 0.0126 |
| | Sound insulating properties: TL method | | | ○ | ○ | ○ | ○ | ○ | ○ | ○ | ○ |
| | Visible light transmittance | | | ○ | ○ | ○ | ○ | ○ | ○ | ○ | ○ |

**[Table 3]**

| | | | | Example 13 | Example 14 | Example 15 | Example 16 | Example 17 | Example 18 | Example 19 | Example 20 |
|---|---|---|---|---|---|---|---|---|---|---|---|
| Composition of first layer | Thickness | | µm | 100 | 100 | 100 | 100 | 100 | 100 | 80 | 50 |
| | Polyvinyl acetal resin | Average degree of polymerization of PVA | | 1700 | 2300 | 1700 | 2300 | 1700 | 1700 | 1700 | 1700 |
| | | Content ratio of hydroxyl group | Mol% | 21.1 | 20.8 | 24.4 | 24.6 | 23.1 | 23.1 | 23.1 | 23.1 |
| | | Degree of acetylation | Mol% | 1.6 | 1.6 | 6.5 | 6.5 | 12.5 | 12.5 | 12.5 | 12.5 |
| | | Degree of acetalization | Mol% | 77.3 | 77.6 | 69.1 | 68.9 | 64.5 | 64.5 | 64.5 | 64.5 |
| | | Content | Part by weight | 100 | 100 | 100 | 100 | 100 | 100 | 100 | 100 |
| | Plasticizer | Type | | 3GO | 3GO | 3GO | 3GO | 3GO | 3GO | 3GO | 3GO |
| | | Content | Part by weight | 60 | 60 | 60 | 60 | 50 | 80 | 60 | 60 |
| | Silica particles | Type | | c | c | c | c | c | c | c | c |
| | | Content | Part by weight | 20 | 20 | 20 | 20 | 20 | 20 | 20 | 20 |
| | Glass transition temperature | | °C | 3.87 | 3.74 | 5.42 | 5.54 | 6.04 | -5.32 | 2.13 | 2.13 |
| | tanδ at 200°C | | | 1.63 | 1.05 | 1.74 | 1.02 | 1.62 | 2.12 | 1.78 | 1.78 |
| Composition of second and third layers | Thickness of each layer | | µm | 340 | 340 | 340 | 340 | 340 | 340 | 350 | 365 |
| | Polyvinyl acetal resin | Average degree of polymerization of PVA | | 1700 | 1700 | 1700 | 1700 | 1700 | 1700 | 1700 | 1700 |
| | | Content ratio of hydroxyl group | Mol% | 34.5 | 34.5 | 34.5 | 34.5 | 34.5 | 34.5 | 34.5 | 34.5 |
| | | Degree of acetylation | Mol% | 0.8 | 0.8 | 0.8 | 0.8 | 0.8 | 0.8 | 0.8 | 0.8 |
| | | Degree of acetalization | Mol% | 64.7 | 64.7 | 64.7 | 64.7 | 64.7 | 64.7 | 64.7 | 64.7 |
| | | Content | Part by weight | 100 | 100 | 100 | 100 | 100 | 100 | 100 | 100 |
| | Plasticizer | Type | | 3GO | 3GO | 3GO | 3GO | 3GO | 3GO | 3GO | 3GO |
| | | Content | Part by weight | 31 | 31 | 36 | 36 | 33 | 30 | 32 | 32 |
| | Glass transition temperature | | °C | 39.9 | 40.3 | 35.6 | 35.3 | 37.3 | 37.3 | 37.3 | 37.3 |
| Evaluation | Flow mark | | | ○ | ○ | ○ | ○ | ○ | ○ | ○ | ○ |
| | Bending rigidity | Laminated glass A | mm/N | 0.0040 | 0.0039 | 0.0040 | 0.0041 | 0.0035 | 0.0048 | 0.0042 | 0.0038 |
| | | Laminated glass B | mm/N | 0.0079 | 0.0079 | 0.0080 | 0.0081 | 0.0073 | 0.0092 | 0.0083 | 0.0076 |
| | | Laminated glass C | mm/N | 0.0544 | 0.0537 | 0.0547 | 0.0569 | 0.0458 | 0.0731 | 0.0604 | 0.0511 |
| | | Laminated glass G | mm/N | 0.0124 | 0.0123 | 0.0124 | 0.0128 | 0.0109 | 0.0152 | 0.0132 | 0.0117 |
| | Sound insulating properties: TL method | | | ○ | ○ | ○ | ○ | ○ | ○ | ○ | ○ |
| | Visible light transmittance | | | ○ | ○ | ○ | ○ | ○ | ○ | ○ | ○ |

**[Table 4]**

| | | | | Example 21 | Example 22 | Example 23 | Example 24 | Example 25 | Comparative Example 3 | Example 26 |
|---|---|---|---|---|---|---|---|---|---|---|
| Composition of first layer | Thickness | | µm | 120 | 120 | 120 | 70 | 100 | 100 | 100 |
| | Polyvinyl acetal resin | Average degree of polymerization of PVA | | 1700 | 1700 | 1700 | 1700 | 1700 | 1700 | 1700 |
| | | Content ratio of hydroxyl group | Mol% | 24.6 | 24.6 | 24.6 | 23.4 | 23.1 | 23.1 | 27.5 |
| | | Degree of acetylation | Mol% | 14 | 14 | 14 | 13.3 | 12.5 | 12.5 | 12.5 |
| | | Degree of acetalization | Mol% | 61.4 | 61.4 | 61.4 | 63.3 | 64.5 | 64.5 | 60 |
| | | Content | Part by weight | 100 | 100 | 100 | 100 | 100 | 100 | 100 |
| | Plasticizer | Type | | 3GO | 3GO | 3GO | 3GO | 3GO | 3GO | DBEA |
| | | Content | Part by weight | 60 | 60 | 60 | 60 | 60 | 60 | 60 |
| | Silica particles | Type | | d | d | d | d | c | c | c |
| | | Content | Part by weight | 20 | 20 | 20 | 20 | 30 | 40 | 20 |
| | Glass transition temperature | | °C | 3.42 | 3.42 | 3.42 | 2.03 | 2.36 | 2.58 | 0.34 |
| | tanδ at 200°C | | | 1.68 | 1.68 | 1.68 | 1.55 | 0.82 | 0.65 | 1.66 |
| Composition of second and third layers | Thickness of each layer | | µm | 330 | 330 | 330 | 355 | 340 | 340 | 340 |
| | Polyvinyl acetal resin | Average degree of polymerization of PVA | | 1700 | 1700 | 1700 | 1700 | 1700 | 1700 | 1700 |
| | | Content ratio of hydroxyl group | Mol% | 34.5 | 34.5 | 34.5 | 34.5 | 34.5 | 34.5 | 34.5 |
| | | Degree of acetylation | Mol% | 0.8 | 0.8 | 0.8 | 0.8 | 0.8 | 0.8 | 0.8 |
| | | Degree of acetalization | Mol% | 64.7 | 64.7 | 64.7 | 64.7 | 64.7 | 64.7 | 64.7 |
| | | Content | Part by weight | 100 | 100 | 100 | 100 | 100 | 100 | 100 |
| | Plasticizer | Type | | 3GO | 3GO | 3GO | 3GO | 3GO | 3GO | DBEA |
| | | Content | Part by weight | 31 | 33 | 35 | 32 | 32 | 32 | 38.5 |
| | Glass transition temperature | | °C | 36.4 | 35.3 | 34.0 | 36.9 | 37.3 | 37.3 | 31.5 |
| Evaluation | Flow mark | | | ○ | ○ | ○ | ○ | ○ | X | ○ |
| | Bending rigidity | Laminated glass A | mm/N | 0.0039 | 0.0043 | 0.0044 | 0.0037 | 0.0035 | 0.0031 | 0.0046 |
| | | Laminated glass B | mm/N | 0.0081 | 0.0084 | 0.0087 | 0.0075 | 0.0082 | 0.0076 | 0.0089 |
| | | Laminated glass C | mm/N | 0.0579 | 0.0617 | 0 . 0667 | 0.0486 | 0.0575 | 0.0508 | 0.0677 |
| | | Laminated glass G | mm/N | 0.0128 | 0.0134 | 0.0142 | 0.0113 | 0.0128 | 0.0117 | 0.0146 |
| | Sound insulating properties: TL method | | | ○ | ○ | ○ | ○ | ○ | ○ | ○ |
| | Visible light transmittance | | | ○ | ○ | ○ | ○ | ○ | ○ | ○ |

### Reference Signs List

- 1: first layer
- 1a: first surface
- 1b: second surface
- 2: second layer
- 2a: surface facing outside
- 3: third layer
- 3a: surface facing outside
- 11: interlayer film
- 11a: first surface
- 11b: second surface
- 21: first lamination glass member
- 22: second lamination glass member
- 31: laminated glass

## Claims

1. An interlayer film for laminated glass comprising:
a first layer which contains a thermoplastic resin and silica particles and has tanδ, as measured according to the method in the description, of 0.8 or greater at 200°C; and
a second layer which contains a thermoplastic resin, is disposed on a first surface side of the first layer, and has a glass transition temperature, as measured according to the method in the description, higher than a glass transition temperature, as measured according to the method in the description, of the first layer,
wherein the thermoplastic resin in the first layer is a polyvinyl acetal resin having a degree of acetylation 2-as measured according to the method in the description, of 15 mol% or less and a degree of acetalization as measured according to the method in the description, of 60 mol% or greater,
wherein the thermoplastic resin in the second layer is selected from a group consisting of a polyvinyl acetal resin, an ethylene-vinyl acetate copolymer resin, an ethylene-acrylic acid copolymer resin, a polyurethane resin and a polyvinyl alcohol resin,
and wherein an absolute value of a difference between a glass transition temperature, as measured according to the method in the description, of the first layer and a glass transition temperature, as measured according to the method in the description, of the second layer is 20°C or higher.

2. The interlayer film for laminated glass according to claim 1,
wherein a content ratio of hydroxyl groups , as measured according to the method in the description, of the polyvinyl acetal resin in the first layer is 28 mol% or less.

3. The interlayer film for laminated glass according to claim 1 or 2, wherein the thermoplastic resin in the second layer is a polyvinyl acetal resin.

4. The interlayer film for laminated glass according to any one of claims 1 to 3,
wherein an absolute value of a difference between a glass transition temperature, as measured according to the method in the description, of the first layer and a glass transition temperature, as measured according to the method in the description, of the second layer is 30°C or higher.

5. The interlayer film for laminated glass according to any one of claims 1 to 4,
wherein the glass transition temperature, as measured according to the method in the description, of the first layer is 15°C or lower.

6. The interlayer film for laminated glass according to any one of claims 1 to 5,
wherein a content of the silica particles in the first layer is 5 parts by weight to 64 parts by weight with respect to 100 parts by weight of the thermoplastic resin in the first layer.

7. The interlayer film for laminated glass according to any one of claims 1 to 6, further comprising:
a third layer containing a thermoplastic resin,
wherein the third layer is disposed on a second surface side of the first layer that is opposite to the first surface.

8. The interlayer film for laminated glass according to claim 7,
wherein each of the first layer, the second layer, and the third layer contains a plasticizer.

9. The interlayer film for laminated glass according to any one of claims 1 to 8,
wherein provided that a thickness of the interlayer film for laminated glass is T, a thickness of the first layer is 0.4T or less.

10. The interlayer film for laminated glass according to any one of claims 1 to 9,
wherein a thickness of the first layer is 200 µm or less.

11. The interlayer film for laminated glass according to any one of claims 1 to 10,
wherein when laminated glass is obtained by interposing the interlayer film for laminated glass between two sheets of green glass having a thickness of 2 mm based on JIS R3208, a visible light transmittance, as measured according to the method in the description, of the obtained laminated glass is 70% or greater.

12. The interlayer film for laminated glass according to any one of claims 1 to 11, being used with a first glass plate with a thickness equal to or less than 1 mm and arranged between the first glass plate and a second glass plate to be used for obtaining laminated glass.

13. A laminated glass comprising:
a first lamination glass member;
a second lamination glass member; and
the interlayer film for laminated glass according to any one of claims 1 to 11,
wherein the interlayer film for laminated glass is disposed between the first lamination glass member and the second lamination glass member.

14. The laminated glass according to claim 13,
wherein the first lamination glass member is a first glass plate, and
a thickness of the first glass plate is 1 mm or less.

## Patentansprüche

1. Zwischenschichtfilm für Verbundglas, umfassend:
eine erste Schicht, die ein thermoplastisches Harz und Siliciumdioxidpartikel enthält und ein tanδ, gemessen gemäß dem Verfahren in der Beschreibung, von wenigstens 0,8 bei 200 °C aufweist; und
eine zweite Schicht, die ein thermoplastisches Harz enthält, die auf einer ersten Oberflächenseite der ersten Schicht angeordnet ist und eine Glasübergangstemperatur, gemessen gemäß dem Verfahren in der Beschreibung, aufweist, die höher als eine Glasübergangstemperatur, gemessen gemäß dem Verfahren in der Beschreibung, der ersten Schicht ist,
wobei das thermoplastische Harz in der ersten Schicht ein Polyvinylacetalharz ist, das einen Acetylierungsgrad, gemessen gemäß dem Verfahren in der Beschreibung, von höchstens 15 Mol-% und einen Acetalisierungsgrad, gemessen gemäß dem Verfahren in der Beschreibung, von wenigstens 60 Mol-% aufweist,
wobei das thermoplastische Harz in der zweiten Schicht aus einer Gruppe ausgewählt ist, die aus einem Polyvinylacetalharz, einem Ethylen-Vinylacetat-Copolymerharz, einem Ethylen-Acrylsäure-Copolymerharz, einem Polyurethanharz und einem Polyvinylalkoholharz besteht,
und wobei ein Absolutwert einer Differenz zwischen einer Glasübergangstemperatur, gemessen gemäß dem Verfahren in der Beschreibung, der ersten Schicht und einer Glasübergangstemperatur, gemessen gemäß dem Verfahren in der Beschreibung, der zweiten Schicht 20 °C oder mehr beträgt.

2. Zwischenschichtfilm für Verbundglas nach Anspruch 1,
wobei ein Gehaltsverhältnis von Hydroxylgruppen, gemessen gemäß dem Verfahren in der Beschreibung, des Polyvinylacetalharzes in der ersten Schicht höchstens 28 Mol-% beträgt.

3. Zwischenschichtfilm für Verbundglas nach Anspruch 1 oder 2,
wobei das thermoplastische Harz in der zweiten Schicht ein Polyvinylacetalharz ist.

4. Zwischenschichtfilm für Verbundglas nach einem der Ansprüche 1 bis 3,
wobei ein Absolutwert einer Differenz zwischen einer Glasübergangstemperatur, gemessen gemäß dem Verfahren in der Beschreibung, der ersten Schicht und einer Glasübergangstemperatur, gemessen gemäß dem Verfahren in der Beschreibung, der zweiten Schicht 30 °C oder mehr beträgt.

5. Zwischenschichtfilm für Verbundglas nach einem der Ansprüche 1 bis 4,
wobei die Glasübergangstemperatur, gemessen gemäß dem Verfahren in der Beschreibung, der ersten Schicht 15 °C oder weniger beträgt.

6. Zwischenschichtfilm für Verbundglas nach einem der Ansprüche 1 bis 5,
wobei ein Gehalt der Siliciumdioxidpartikel in der ersten Schicht 5 Gewichtsteile bis 64 Gewichtsteile hinsichtlich 100 Gewichtsteilen des thermoplastischen Harzes in der ersten Schicht beträgt.

7. Zwischenschichtfilm für Verbundglas nach einem der Ansprüche 1 bis 6, ferner umfassend:
eine dritte Schicht, die ein thermoplastisches Harz enthält,
wobei die dritte Schicht auf einer zweiten Oberflächenseite der ersten Schicht angeordnet ist, die der ersten Oberfläche gegenüberliegt.

8. Zwischenschichtfilm für Verbundglas nach Anspruch 7,
wobei jede der ersten Schicht, der zweiten Schicht und der dritten Schicht einen Weichmacher enthält.

9. Zwischenschichtfilm für Verbundglas nach einem der Ansprüche 1 bis 8,
wobei, vorausgesetzt, dass eine Dicke des Zwischenschichtfilms für Verbundglas T ist, eine Dicke der ersten Schicht höchstens 0,4 T beträgt.

10. Zwischenschichtfilm für Verbundglas nach einem der Ansprüche 1 bis 9,
wobei eine Dicke der ersten Schicht höchstens 200 µm beträgt.

11. Zwischenschichtfilm für Verbundglas nach einem der Ansprüche 1 bis 10,
wobei, wenn Verbundglas durch Einfügen des Zwischenschichtfilms für Verbundglas zwischen zwei Grünglasscheiben erhalten wird, die eine Dicke von 2 mm aufweisen, basierend auf JIS R3208, eine Durchlässigkeit sichtbaren Lichts, gemessen gemäß dem Verfahren in der Beschreibung, des erhaltenen Verbundglases wenigstens 70 % beträgt.

12. Zwischenschichtfilm für Verbundglas nach einem der Ansprüche 1 bis 11, der mit einer ersten Glasplatte mit einer Dicke von gleich oder weniger als 1 mm verwendet wird und zwischen der ersten Glasplatte und einer zweiten Glasplatte gelagert ist, die zum Erhalten von Verbundglas verwendet werden sollen.

13. Verbundglas, umfassend:
ein erstes Laminierungsglaselement;
ein zweites Laminierungsglaselement; und
den Zwischenschichtfilm für Verbundglas nach einem der Ansprüche 1 bis 11,
wobei der Zwischenschichtfilm für Verbundglas zwischen dem ersten Laminierungsglaselement und dem zweiten Laminierungsglaselement angeordnet ist.

14. Verbundglas nach Anspruch 13,
wobei das erste Laminierungsglaselement eine erste Glasplatte ist und
eine Dicke der ersten Glasplatte höchstens 1 mm beträgt.

## Revendications

1. Film intercouche pour verre feuilleté, comprenant :
une première couche qui contient une résine thermoplastique et des particules de silice et ayant une tanδ, telle que mesurée selon le procédé de la description, de 0,8 ou plus à 200 °C ; et
une deuxième couche qui contient une résine thermoplastique, étant disposée sur un premier côté de surface de la première couche, et ayant une température de transition vitreuse, telle que mesurée selon le procédé de la description, supérieure à une température de transition vitreuse, telle que mesurée selon le procédé dans la description de la première couche,
la résine thermoplastique dans la première couche étant une résine d'acétal de polyvinyle ayant un degré d'acétylation tel que mesuré selon le procédé décrit dans la description, de 15 % en moles ou moins et un degré d'acétalisation, tel que mesuré selon le procédé de la description, de 60 % en moles ou plus,
la résine thermoplastique dans la deuxième couche étant choisie dans un groupe constitué d'une résine d'acétal de polyvinyle, une résine de copolymère éthylène-acétate de vinyle, une résine de copolymère éthylène-acide acrylique, une résine de polyuréthane et une résine d'alcool de polyvinyle,
et une valeur absolue d'une différence entre une température de transition vitreuse, telle que mesurée selon le procédé dans la description, de la première couche et d'une température de transition vitreuse, telle que mesurée selon le procédé de la description, de la deuxième couche étant à 20 °C ou plus.

2. Film intercouche pour verre feuilleté selon la revendication 1,
un rapport en teneur en groupes hydroxyle, tel que mesuré selon le procédé de la description, de la résine d'acétal de polyvinyle dans la première couche étant de 28 % en moles ou moins.

3. Film intercouche pour verre feuilleté selon la revendication 1 ou 2,
la résine thermoplastique dans la deuxième couche étant une résine d'acétal de polyvinyle.

4. Film intercouche pour verre feuilleté selon l'une quelconque des revendications 1 à 3,
une valeur absolue d'une différence entre une température de transition vitreuse, telle que mesurée selon le procédé de la description, de la première couche et une température de transition vitreuse, telle que mesurée selon le procédé de la description, de la deuxième couche étant de 30 °C ou plus.

5. Film intercouche pour verre feuilleté selon l'une quelconque des revendications 1 à 4,
la température de transition vitreuse, telle que mesurée selon le procédé de la description, de la première couche étant de 15 °C ou moins.

6. Film intercouche pour verre feuilleté selon l'une quelconque des revendications 1 à 5, une teneur en particules de silice dans la première couche étant de 5 parties en poids à 64 parties en poids par rapport à 100 parties en poids de la résine d'acétal de polyvinyle dans la première couche.

7. Film intercouche pour verre feuilleté selon l'une quelconque des revendications 1 à 6, comprenant en outre :
une troisième couche contenant une résine thermoplastique,
la troisième couche étant disposée sur un second côté de surface de la première couche qui est à l'opposé de la première surface.

8. Film intercouche pour verre feuilleté selon la revendication 7,
chacune de la première couche, de la deuxième couche et de la troisième couche contenant un plastifiant.

9. Film intercouche pour verre feuilleté selon l'une quelconque des revendications 1 à 8,
à condition qu'une épaisseur du film intercouche pour verre feuilleté soit T, une épaisseur de la première couche étant de 0,4 T ou moins.

10. Film intercouche pour verre feuilleté selon l'une quelconque des revendications 1 à 9, une épaisseur de la première couche étant de 200 µm ou moins.

11. Film intercouche pour verre feuilleté selon l'une quelconque des revendications 1 à 10,
lorsque le verre feuilleté est obtenu en interposant le film intercouche pour verre feuilleté entre deux feuilles de verre précurseur d'une épaisseur de 2 mm conformément à la norme JIS R3208, une transmission de lumière visible, telle que mesurée selon le procédé de la description, du verre feuilleté obtenu étant de 70 % ou plus.

12. Film intercouche pour verre feuilleté selon l'une quelconque des revendications 1 à 11, étant utilisé avec une première plaque de verre d'une épaisseur égale ou inférieure à 1 mm et disposé entre la première plaque de verre et une seconde plaque de verre à utiliser pour l'obtention du verre feuilleté.

13. Verre feuilleté comprenant :
un premier élément de verre de feuilletage ;
un second élément de verre de feuilletage ; et
le film intercouche pour verre feuilleté selon l'une quelconque des revendications 1 à 11,
le film intercouche pour verre feuilleté étant disposé entre le premier élément de verre de feuilletage et le second élément de verre de feuilletage.

14. Verre feuilleté selon la revendication 13,
le premier élément de verre de feuilletage étant une première plaque de verre, et
une épaisseur de la première plaque de verre étant de 1 mm ou moins.
